# EUROPEAN PATENT APPLICATION

(11) **EP 4 307 043 A1**
(43) Date of publication of application: **17.01.2024**
(21) Application number: 22197987.5
(22) Date of filing: 27.09.2022
(51) Int. Cl.: G03B 5/00, G03B 30/00, G02B 27/64

(54) **IMAGE STABILIZATION LENS MODULE, CAMERA MODULE AND ELECTRONIC DEVICE**

(30) Priority: 15.07.2022 US 202263389760 P
(71) Applicant: Largan Precision Co. Ltd., Taichung City (TW)
(72) Inventor: TSENG, Te-Sheng, Taichung City (TW); SU, HENG YI, Taichung City (TW); CHOU, Ming-Ta, Taichung City (TW)
(74) Representative: dompatent von Kreisler Selting Werner - Partnerschaft von Patent- und Rechtsanwälten mbB

(57) **Abstract**

An image stabilization lens module (2) includes a lens holder (22), a light-folding element (24), a movable carrier (25), a fixed base (23), a swing element (26) and a driving mechanism (28). The movable carrier (25) carries the light-folding element (24). The fixed base (23) connects the movable carrier (25) via an elastic element (EC). The swing element (26) between the movable carrier (25) and the fixed base (23) includes a main body (260), a carrier support structure (261) and a base auxiliary structure (264) on a carrier corresponsive surface (CS) of the main body (260), and a base support structure (262) and a carrier auxiliary structure (263) on a base corresponsive surface (BS) of the main body (260). The carrier support structure (261) supports the movable carrier (25). The base support structure (262) contacts the fixed base (23). The driving mechanism (28) is for driving the movable carrier (25) to rotate. The carrier auxiliary structure (263), the base auxiliary structure (264) and the main body (260) are formed in one piece.

## Description

### BACKGROUND

### Technical Field

The present disclosure relates to an image stabilization lens module, a camera module and an electronic device, more particularly to an image stabilization lens module, a camera module applicable to an electronic device.

### Description of Related Art

With the development of semiconductor manufacturing technology, the performance of image sensors has been improved, and the pixel size thereof has been scaled down. Therefore, featuring high image quality becomes one of the indispensable features of an optical system nowadays. Furthermore, due to the rapid changes in technology, electronic devices equipped with optical systems are trending towards multi-functionality for various applications, and therefore the functionality requirements for the optical systems have been increasing.

In recent years, there is an increasing demand for electronic devices featuring compact size, but conventional optical systems, especially the telephoto optical systems with a long focal length, are difficult to meet both the requirements of high image quality and compactness. Conventional telephoto optical systems usually have shortcomings of overly long total length, poor image quality or overly large size, which is unable to meet the requirements of the current technology trends. To achieve compactness, the optical systems may be configured to have a folded optical axis so as to reduce the dimension of the optical systems in a specific direction, thereby reducing the total system size. Moreover, the optical systems can be configured with anti-vibration function for achieving high image quality. However, to meet the abovementioned requirements, a driving unit of complex structure is required to drive an optical axis folding element, which results in more complex structure and more weight of the optical systems.

Accordingly, how to improve the optical systems for simplifying the structure of the lens assembly, achieving a compact size and maintaining high image quality so as to meet the requirement of high-end-specification electronic devices is an important topic in this field nowadays.

### SUMMARY

According to one aspect of the present disclosure, an image stabilization lens module includes an optical lens assembly, a lens holder, a light-folding element, a movable carrier, a fixed base, a plastic swing element and a driving mechanism. The optical lens assembly includes a plurality of optical lens elements, and an optical axis passes through the optical lens elements. The lens holder holds the optical lens elements of the optical lens assembly. The light-folding element is located on the optical axis and folds the optical axis. The movable carrier carries the light-folding element. The fixed base is connected to the movable carrier via an elastic element. The plastic swing element is disposed between the movable carrier and the fixed base. The plastic swing element includes a main body, a carrier support structure, a base support structure, a carrier auxiliary structure and a base auxiliary structure. The main body has a carrier corresponsive surface facing the movable carrier and a base corresponsive surface facing the fixed base. The carrier support structure is disposed on the carrier corresponsive surface, and the carrier support structure supports and is connected to the movable carrier. The base support structure is disposed on the base corresponsive surface, and the base support structure is connected to the fixed base, so that the fixed base supports the plastic swing element. The carrier auxiliary structure is disposed on the base corresponsive surface, and the carrier auxiliary structure is disposed opposite to the carrier support structure. The base auxiliary structure is disposed on the carrier corresponsive surface, and the base auxiliary structure is disposed opposite to the base support structure. The driving mechanism is configured to drive the movable carrier to rotate relative to the fixed base. In addition, the light-folding element is located on an object side of the lens holder. The carrier support structure is in physical contact with the movable carrier, and the base support structure is in physical contact with the fixed base. The carrier auxiliary structure, the base auxiliary structure and the main body of the plastic swing element are formed in one piece.

According to another aspect of the present disclosure, an image stabilization lens module includes an optical lens assembly, a lens holder, a light-folding element, a movable carrier, a fixed base, a swing element and a driving mechanism. The optical lens assembly includes a plurality of optical lens elements, and an optical axis passes through the optical lens elements. The lens holder holds the optical lens elements of the optical lens assembly. The light-folding element is located on the optical axis and folds the optical axis. The movable carrier carriers the light-folding element. The fixed base is connected to the movable carrier via an elastic element. The swing element is disposed between the movable carrier and the fixed base. The swing element includes a main body, a carrier support structure, a base support structure, a carrier auxiliary structure and a base auxiliary structure. The main body has a carrier corresponsive surface facing the movable carrier and a base corresponsive surface facing the fixed base. The carrier support structure is disposed on the carrier corresponsive surface, and the carrier support structure supports and is connected to the movable carrier. The base support structure is disposed on the base corresponsive surface, and the base support structure is connected to the fixed base, so that the fixed base supports the swing element. The carrier auxiliary structure is disposed on the base corresponsive surface, and the carrier auxiliary structure is disposed opposite to the carrier support structure. The base auxiliary structure is disposed on the carrier corresponsive surface, and the base auxiliary structure is disposed opposite to the base support structure. The driving mechanism is configured to drive the movable carrier to rotate relative to the fixed base. In addition, the light-folding element is located on an image side of the lens holder. The carrier support structure is in physical contact with the movable carrier, and the base support structure is in physical contact with the fixed base. The carrier auxiliary structure, the base auxiliary structure and the main body of the swing element are formed in one piece.

According to another aspect of the present disclosure, an image stabilization lens module includes an optical lens assembly, a lens holder, a light-folding element, a movable carrier, a fixed base, a swing element, a first driving mechanism, a second driving mechanism and a flexible printed circuit board. The optical lens assembly includes a plurality of optical lens elements, and an optical axis passes through the optical lens elements. The lens holder holds the optical lens elements of the optical lens assembly. The light-folding element is located on the optical axis and folds the optical axis. The movable carrier carries the light-folding element. The fixed base is connected to the movable carrier via an elastic element. The swing element is disposed between the movable carrier and the fixed base. The first driving mechanism is configured to drive the movable carrier to rotate relative to the fixed base in a first rotation direction or in a direction opposite to the first rotation direction, and the first driving mechanism includes a first coil and a first magnet disposed corresponding to each other. The second driving mechanism is configured to drive the movable carrier to rotate relative to the fixed base in a second rotation direction or in a direction opposite to the second rotation direction, and the second driving mechanism includes a second coil and a second magnet disposed corresponding to each other. The flexible printed circuit board is attached to the fixed base. In addition, the light-folding element is located on an image side of the lens holder. The swing element is in physical contact with the movable carrier, and the swing element is in physical contact with the fixed base. The first coil and the second coil are disposed on the flexible printed circuit board, and the first magnet and the second magnet are disposed on the movable carrier.

According to another aspect of the present disclosure, a camera module includes an image sensor and one of the aforementioned image stabilization lens modules. The image sensor is disposed on an image surface of the image stabilization lens module.

According to another aspect of the present disclosure, an electronic device includes the aforementioned camera module.

### BRIEF DESCRIPTION OF THE DRAWINGS

The disclosure can be better understood by reading the following detailed description of the embodiments, with reference made to the accompanying drawings as follows:
Fig. 1 is a perspective view of a camera module according to the 1st embodiment of the present disclosure;
Fig. 2 is an exploded view of the camera module in Fig. 1;
Fig. 3 is another exploded view of the camera module in Fig. 1;
Fig. 4 is a top view of the camera module in Fig. 1;
Fig. 5 is a side view of the camera module in Fig. 1;
Fig. 6 is an enlarged view of a plastic swing element in Fig. 2;
Fig. 7 is an enlarged view of the plastic swing element in Fig. 3;
Fig. 8 is an enlarged view of region EL1 in Fig. 7;
Fig. 9 is a sectional view of the camera module along line 9-9 in Fig. 5;
Fig. 10 is an enlarged view of region EL2 in Fig. 9;
Fig. 11 is a schematic view of a movable carrier in Fig. 10 rotated in a first rotation direction;
Fig. 12 is a schematic view of the movable carrier in Fig. 10 rotated in a direction opposite to the first rotation direction;
Fig. 13 is an enlarged view of region EL3 in Fig. 11;
Fig. 14 is a sectional view of the camera module along line 14-14 in Fig. 4;
Fig. 15 is an enlarged view of region EL4 in Fig. 14;
Fig. 16 is a schematic view of the movable carrier and the plastic swing element in Fig. 15 rotated in a second rotation direction;
Fig. 17 is a schematic view of the movable carrier and the plastic swing element in Fig. 15 rotated in a direction opposite to the second rotation direction;
Fig. 18 is an enlarged view of region EL5 in Fig. 16;
Fig. 19 is a perspective view of a camera module according to the 2nd embodiment of the present disclosure;
Fig. 20 is an exploded view of the camera module in Fig. 19;
Fig. 21 is another exploded view of the camera module in Fig. 19;
Fig. 22 is a top view of the camera module in Fig. 19;
Fig. 23 is a side view of the camera module in Fig. 19;
Fig. 24 is an enlarged view of a swing element in Fig. 20;
Fig. 25 is an enlarged view of the swing element in Fig. 21;
Fig. 26 is a sectional view of the camera module along line 26-26 in Fig. 22;
Fig. 27 is an enlarged view of region EL6 in Fig. 26;
Fig. 28 is a schematic view of a movable carrier in Fig. 27 rotated in a first rotation direction;
Fig. 29 is a schematic view of the movable carrier in Fig. 27 rotated in a direction opposite to the first rotation direction;
Fig. 30 is an enlarged view of region EL7 in Fig. 28;
Fig. 31 is a sectional view of the camera module along line 31-31 in Fig. 23;
Fig. 32 is an enlarged view of region EL8 in Fig. 31;
Fig. 33 is schematic view of the movable carrier and the swing element in Fig. 32 rotated in a second rotation direction;
Fig. 34 is schematic view of the movable carrier and the swing element in Fig. 32 rotated in a direction opposite to the second rotation direction;
Fig. 35 is an enlarged view of region EL9 in Fig. 33;
Fig. 36 is a perspective view of a camera module according to the 3rd embodiment of the present disclosure;
Fig. 37 is an exploded view of the camera module in Fig. 36;
Fig. 38 is another exploded view of the camera module in Fig. 36;
Fig. 39 is a top view of the camera module in Fig. 36;
Fig. 40 is a side view of the camera module in Fig. 36;
Fig. 41 is an enlarged view of a plastic swing element in Fig. 37;
Fig. 42 is an enlarged view of the plastic swing element in Fig. 38;
Fig. 43 is an enlarged view of region EL10 in Fig. 42;
Fig. 44 is a sectional view of the camera module along line 44-44 in Fig. 40;
Fig. 45 is an enlarged view of region EL11 in Fig. 44;
Fig. 46 is a schematic view of a movable carrier in Fig. 45 rotated in a first rotation direction;
Fig. 47 is a schematic view of the movable carrier in Fig. 45 rotated in a direction opposite to the first rotation direction;
Fig. 48 is an enlarged view of region EL12 in Fig. 46;
Fig. 49 is a sectional view of the camera module along line 49-49 in Fig. 39;
Fig. 50 is an enlarged view of region EL13 in Fig. 49;
Fig. 51 is schematic view of the movable carrier and the plastic swing element in Fig. 50 rotated in a second rotation direction;
Fig. 52 is schematic view of the movable carrier and the plastic swing element in Fig. 50 rotated in a direction opposite to the second rotation direction;
Fig. 53 is an enlarged view of region EL14 in Fig. 51;
Fig. 54 is a perspective view of a camera module according to the 4th embodiment of the present disclosure;
Fig. 55 is another perspective view of the camera module in Fig. 54;
Fig. 56 is an exploded view of the camera module in Fig. 54;
Fig. 57 is an exploded view of a movable carrier and a swing element in Fig. 56;
Fig. 58 is another exploded view of the camera module in Fig. 54;
Fig. 59 is a partially exploded view of a fixed base, a flexible printed circuit board, coils and the swing element in Fig. 58;
Fig. 60 is a top view of the camera module in Fig. 54;
Fig. 61 is a sectional view of the camera module along line 61-61 in Fig. 60;
Fig. 62 is a partially exploded view of the fixed base, the flexible printed circuit board, driving mechanisms, the swing element and the movable carrier in Fig. 58;
Fig. 63 is one perspective view of an electronic device according to the 5th embodiment of the present disclosure;
Fig. 64 is another perspective view of the electronic device in Fig. 63;
Fig. 65 is an image captured by an ultra-wide-angle camera module;
Fig. 66 is an image captured by a high pixel camera module;
Fig. 67 is an image captured by a telephoto camera module;
Fig. 68 is one perspective view of an electronic device according to the 6th embodiment of the present disclosure;
Fig. 69 is a perspective view of an electronic device according to the 7th embodiment of the present disclosure;
Fig. 70 is a side view of the electronic device in Fig. 69; and
Fig. 71 is a top view of the electronic device in Fig. 69.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

The present disclosure provides an image stabilization lens module. The image stabilization lens module includes an optical lens assembly, a lens holder, at least one light-folding element, a movable carrier, a fixed base, a swing element and at least one driving mechanism.

The optical lens assembly includes a plurality of optical lens elements, and an optical axis passes through the optical lens elements. Moreover, the lens holder holds the optical lens elements of the optical lens assembly.

The light-folding element can be located on an object side or an image side of the lens holder, and the light-folding element folds the optical axis. For example, in one configuration where the light-folding element is disposed on the object side of the lens holder, the light-folding element is configured to redirect an incident light traveling along the optical axis towards the lens holder, so that the light passes through the optical lens elements of the optical lens assembly. In one configuration where the light-folding element is disposed on the image side of the lens holder, the light-folding element is configured to redirect the light coming from the optical lens assembly. In addition, in one configuration where the number of light-folding element is plural, one of the light-folding elements can be disposed on the object side of the lens holder, and another of the light-folding elements can be disposed on the image side of the lens holder, so that light changes its traveling direction multiple times in the image stabilization lens module so as to be applicable to various optical systems of different requirements. Moreover, the light-folding element can be, for example, a mirror having a reflection surface or a prism having a reflection surface, but the present disclosure is not limited thereto. Furthermore, in some configurations, the light-folding element can have several reflection surfaces, so that light changes its traveling direction multiple times in the image stabilization lens module. In some configurations, the light-folding element can include a plurality of prisms that are cemented or assembled together, but the present disclosure is not limited thereto.

The movable carrier carries the light-folding element, and the movable carrier is configured to bring the light-folding element to rotate together.

The fixed base is connected to the movable carrier via an elastic element. The elastic element provides a preload force so that the movable carrier can be rotatably and more stably disposed on the fixed base. For example, the elastic element exerts a preload force on the movable carrier in a direction towards the fixed base. Therefore, the movable carrier can remain stable when the movable carrier is not driven to move.

The swing element is disposed between the movable carrier and the fixed base, the swing element is in physical contact with the movable carrier, and the swing element is in physical contact with the fixed base. Therefore, the swing element provides the movable carrier with a degree of freedom of rotation relative to the fixed base. Moreover, the degree of freedom of rotation can be a rotation direction, such as pitching or yawing, but the present disclosure is not limited thereto. In some configurations, the swing element can be made of plastic material as a plastic swing element, but the present disclosure is not limited thereto.

The driving mechanism is configured to drive the movable carrier to rotate in at least one direction relative to the fixed base, so that the light-folding element disposed on the movable carrier can be rotated together relative to the fixed base.

According to the present disclosure, the driving mechanism can drive the movable carrier and the light-folding element disposed on the movable carrier to rotate relative to the fixed base so as to change the direction of the optical axis, thereby achieving image stabilization.

The swing element can include a main body, a carrier support structure, a base support structure, a carrier auxiliary structure and a base auxiliary structure. The main body has a carrier corresponsive surface facing the movable carrier and a base corresponsive surface facing the fixed base. The carrier support structure is disposed on the carrier corresponsive surface, and the carrier support structure supports and is connected to the movable carrier. The carrier support structure is in physical contact with the movable carrier. The base support structure is disposed on the base corresponsive surface, and the base support structure is connected to the fixed base, so that the fixed base supports the swing element, and the base support structure is in physical contact with the fixed base. The carrier auxiliary structure is disposed on the base corresponsive surface, and the carrier auxiliary structure is disposed opposite to the carrier support structure. The base auxiliary structure is disposed on the carrier corresponsive surface, and the base auxiliary structure is disposed opposite to the base support structure. In addition, the carrier auxiliary structure, the base auxiliary structure and the main body are formed in one piece. Furthermore, the carrier auxiliary structure, the base auxiliary structure and the main body of the swing element can be one-piece formed by, for example, injection molding, metal stamping process or sheet metal bending, but the present disclosure is not limited thereto.

The image stabilization lens module can further include a flexible printed circuit board attached to the fixed base. Therefore, the flexible printed circuit board is bendable, which is favorable for reducing the size of the image stabilization lens module.

The driving mechanism can include at least one coil and at least one magnet disposed corresponding to each other. One of the coil and the magnet is disposed on the movable carrier, and the other of the coil and the magnet is directly or indirectly disposed on the fixed base. Therefore, a proper number of the coil and the magnet is favorable for optimizing the driving efficiency of the driving mechanism. In one configuration, the magnet can be disposed on the movable carrier, and the coil can be disposed on the flexible printed circuit board attached to the fixed base, such that the coil is indirectly disposed on the fixed base. Therefore, it is favorable for providing a circuit design of better space utilization efficiency.

The driving mechanism is configured to drive the movable carrier to rotate relative to the fixed base in a first rotation direction and to rotate relative to the fixed base in a direction opposite to the first rotation direction, and drive the movable carrier to rotate relative to the fixed base in a second rotation direction and to rotate relative to the fixed base in a direction opposite to the second rotation direction. In one configuration, the driving mechanism can include a first driving mechanism and a second driving mechanism. The first driving mechanism is configured to drive the movable carrier to rotate relative to the fixed base in the first rotation direction or in the direction opposite to the first rotation direction, the second driving mechanism is configured to drive the movable carrier to rotate relative to the fixed base in the second rotation direction or in the direction opposite to the second rotation direction, and a rotation axis of the first rotation direction is different from a rotation axis of the second rotation direction. The first driving mechanism includes a first coil and a first magnet disposed corresponding to each other, and the second driving mechanism includes a second coil and a second magnet corresponding to each other. Moreover, the first coil and the second coil can be both disposed on the flexible printed circuit board attached to the fixed base, and the first magnet and the second magnet can be both disposed on the movable carrier.

A first block mechanism can be formed between the carrier auxiliary structure and the fixed base. For example, after the swing element is driven (e.g., brought by the movable carrier) to rotate a certain angle in the second rotation direction or in its opposite rotation direction, the carrier auxiliary structure on the base corresponsive surface of the main body of the swing element comes into contact with the fixed base, such that the fixed base blocks the carrier auxiliary structure so as to stop the rotation of the swing element. Therefore, it is favorable for reducing the impact force between the swing element and the fixed base so as to improve module operation quality. Moreover, the first block mechanism can provide a buffer against impact force, reduce impact noise and/or limit the movement range of the swing element, but the present disclosure is not limited thereto.

The carrier auxiliary structure can overlap the carrier support structure in a direction parallel to a part of the optical axis passing through the optical lens elements. Therefore, it is favorable for enhancing the effect of the first block mechanism.

A second block mechanism can be formed between the base auxiliary structure and the movable carrier. For example, after the movable carrier is driven to rotate a certain angle in the first rotation direction or the direction opposite to the first rotation direction, the movable carrier comes into contact with the base auxiliary structure on the carrier corresponsive surface of the main body of the swing element, such that the base auxiliary structure blocks the movable carrier so as to stop the rotation of the movable carrier. Therefore, it is favorable for reducing the impact force between the swing element and the movable carrier so as to improve module operation quality. Moreover, the second block mechanism can provide a buffer against impact force, reduce impact noise and/or limit the movement range of the movable carrier, but the present disclosure is not limited thereto.

The base auxiliary structure can overlap the base support structure in the direction parallel to the part of the optical axis passing through the optical lens elements. Therefore, it is favorable for enhancing the effect of the second block mechanism.

In some configurations, the carrier support structure can consist of at least two balls and at least two conical recesses, the conical recesses are formed on the carrier corresponsive surface, and the balls are respectively in physical contact with the conical recesses. Moreover, each of the conical recesses can consist of multiple flat surfaces that are tangent to the surface of the ball, thus having a conical appearance, but the present disclosure is not limited thereto. Therefore, the flat surfaces of the conical recesses are in physical contact with the balls via contact points, such that the structural stability of the carrier support structure can be improved.

In some configurations, the carrier support structure can consist of at least one cylindrical protrusion or at least one cylindrical recess. Therefore, the cylindrical protrusion or the cylindrical recess one-piece formed with the main body of the swing element is favorable for reducing manufacturing costs. Moreover, the cross-section of the cylindrical protrusion or the cylindrical recess can be in an arc shape and have a particular curvature radius, but the present disclosure is not limited thereto.

The carrier support structure can have a first rotation axis, and the movable carrier is rotatable relative to the fixed base in the first rotation direction and the direction opposite to the first rotation direction around the first rotation axis. Therefore, it is favorable for providing the feasibility of adjusting the optical axis direction along the first rotation direction and its opposite rotation direction so as to obtain clear images. Moreover, the first rotation direction and its opposite rotation direction can be, for example, pitching or yawing, but the present disclosure is not limited thereto. In one configuration where the carrier support structure consists of at least two balls and at least two conical recesses, the first rotation axis can be located in a connection line of contact points between the movable carrier and the balls of the carrier support structure, but the present disclosure is not limited thereto; in other configurations, the first rotation axis can be located, for example, in a connection line of the centers of the balls of the carrier support structure. In one configuration where the carrier support structure consists of at least one cylindrical recess, the first rotation axis can be located in a connection line of contact points between the movable carrier and the cylindrical recess of the carrier support structure, but the present disclosure is not limited thereto; in other configurations, the first rotation axis can be located, for example, in an axis of the cylindrical recess on the carrier support structure.

In some configurations, the base support structure can consist of at least two balls and at least two conical recesses, the conical recesses are formed on the base corresponsive surface, and the balls are respectively in physical contact with the conical recesses. Moreover, each of the conical recesses can consist of multiple flat surfaces that are tangent to the ball to have a conical appearance, but the present disclosure is not limited thereto. Therefore, the balls are in physical contact with the conical recesses via contact points, so the rolling resistance of the balls can be reduced.

In some configurations, the base support structure can consist of at least one cylindrical protrusion or at least one cylindrical recess. Therefore, the cylindrical protrusion or the cylindrical recess one-piece formed with the main body of the swing element is favorable for increasing product design flexibility.

The base support structure can have a second rotation axis, and the movable carrier is rotatable relative to the fixed base in the second rotation direction and the direction opposite to the second rotation direction around the second rotation axis. Therefore, it is favorable for providing the feasibility of adjusting the optical axis direction along the second rotation direction and its opposite rotation direction so as to obtain clear images. Moreover, the second rotation direction and its opposite rotation direction can be, for example, pitching or yawing, but the present disclosure is not limited thereto. In one configuration where the base support structure consists of at least two balls and at least two conical recesses, the second rotation axis can be located in a connection line of contact points between the fixed base and the balls of the base support structure, but the present disclosure is not limited thereto; in other configurations, the second rotation axis can be located, for example, in a connection line of the centers of the balls of the base support structure. In the base support structure consists of at least one cylindrical protrusion, the second rotation axis can be located in a connection line of contact points between the fixed base and the cylindrical protrusion of the base support structure, but the present disclosure is not limited thereto; in other configurations, the second rotation axis can be located, for example, in an axis of the cylindrical protrusion on the base support structure.

The rotation axis of the first rotation direction and the rotation axis of the second rotation direction are different from each other and can be orthogonal to each other; in other words, the first rotation axis and the second rotation axis are different from each other and can be orthogonal to each other. Therefore, by proper rotation axes (or rotation directions) arrangement, the image stabilization function of the image stabilization lens module can be optimized.

When a maximum field of view of the optical lens assembly is FOV, the following condition can be satisfied: 1 degree < FOV < 50 degrees. Therefore, a telephoto lens module having a narrow field of view can be defined. Moreover, the following condition can also be satisfied: 1 degree < FOV ≤ 35 degrees.

The plastic swing element can have at least one gate trace. Therefore, it is favorable for providing a high molding precision swing element. In addition, the gate trace can be disposed on desired positions of the swing element according to molding requirements so as to achieve better molding efficiency.

Light in the light-folding element can undergo at least one total internal reflection. Therefore, the effect of the total internal reflection(s) in a single light-folding element can be equivalent to the optical property of multiple light-folding elements capable of folding the optical axis, thereby reducing manufacturing costs. Moreover, by selecting a proper reflective index of the light-folding element with multiple reflection surfaces, imaging light can undergo total internal reflection(s) in the light-folding element. Moreover, when light arrives at the interface from a medium of higher refractive index to another medium of lower refractive index and the incident angle is larger than the critical angle, the light undergoes total internal reflection.

The image stabilization lens module can further include a guiding yoke and a guiding magnet. The guiding yoke is disposed on the movable carrier, the guiding magnet is disposed on the fixed base, and the guiding yoke and the guiding magnet are disposed corresponding to each other and together generate a preload force so that the movable carrier can be rotatably and more stably disposed on the fixed base. For example, an interaction between the guiding yoke and the guiding magnet exerts a preload force on the movable carrier in a direction towards the fixed base. Therefore, the assembly stability between the movable carrier and the fixed base can be increased.

According to the present disclosure, a camera module is provided. The camera module includes an image sensor and the aforementioned image stabilization lens module, and the image sensor is disposed on an image surface of the optical lens assembly.

According to the present disclosure, an electronic device is provided. The electronic device includes the aforementioned camera module.

According to the present disclosure, the aforementioned features and conditions can be utilized in numerous combinations so as to achieve corresponding effects.

According to the above description of the present disclosure, the following specific embodiments are provided for further explanation.

### 1st Embodiment

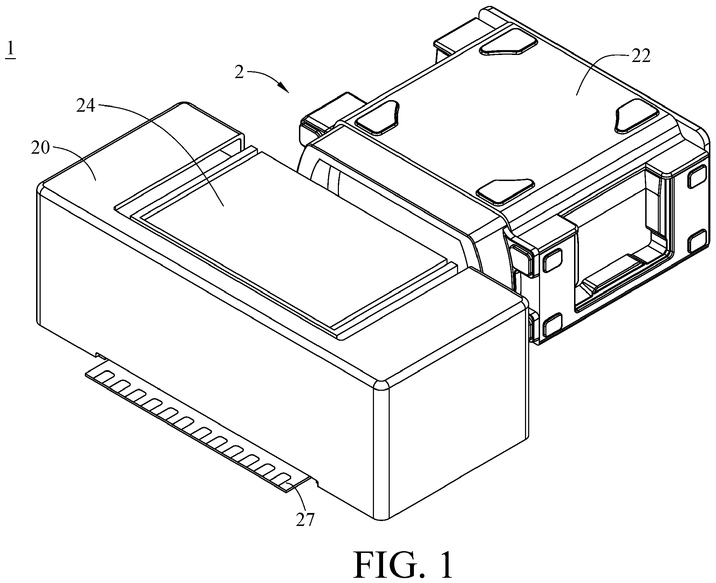

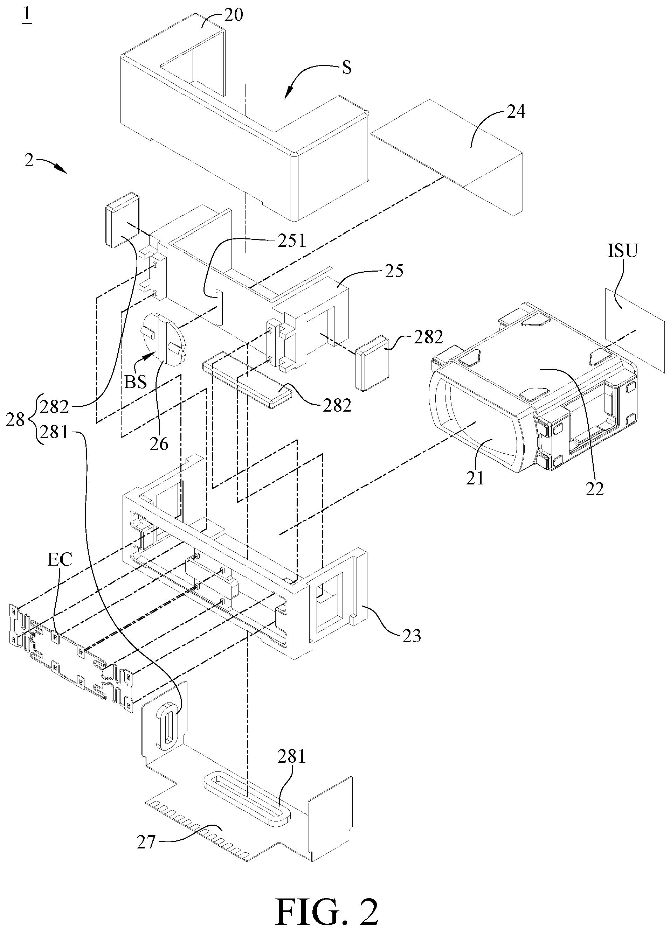

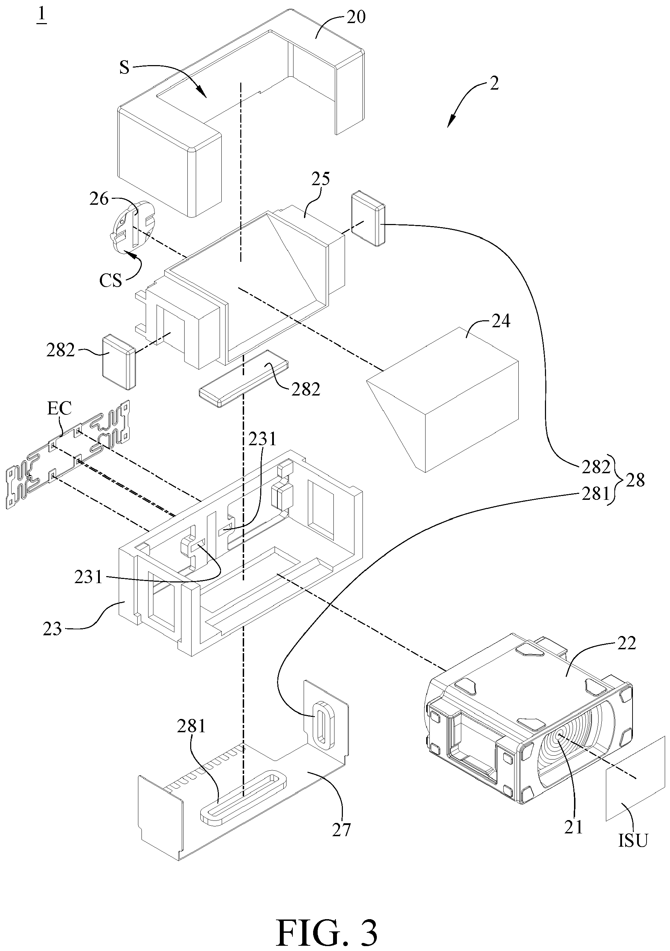

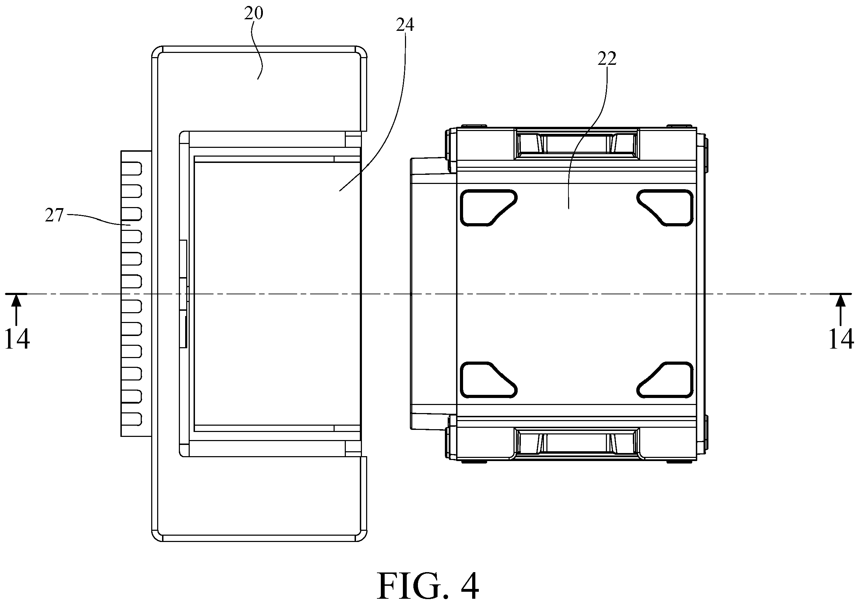

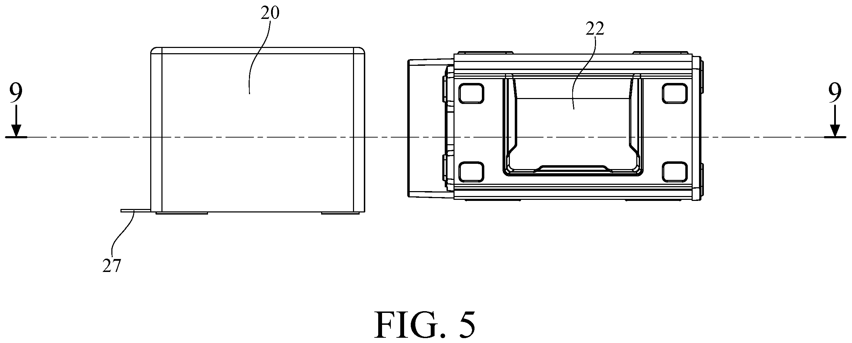

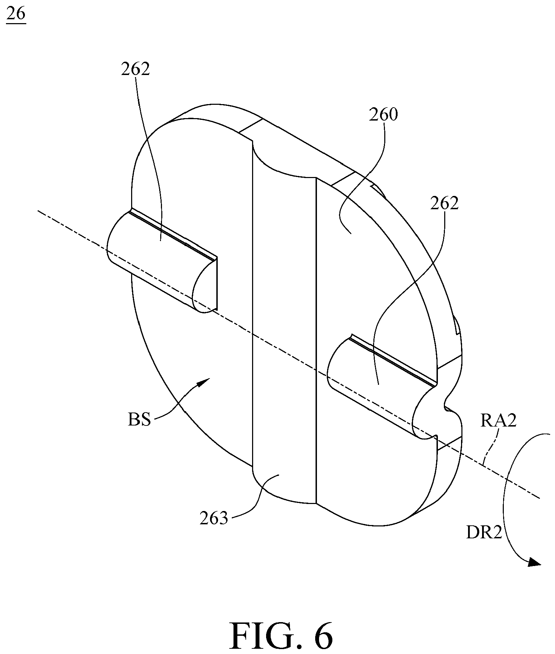

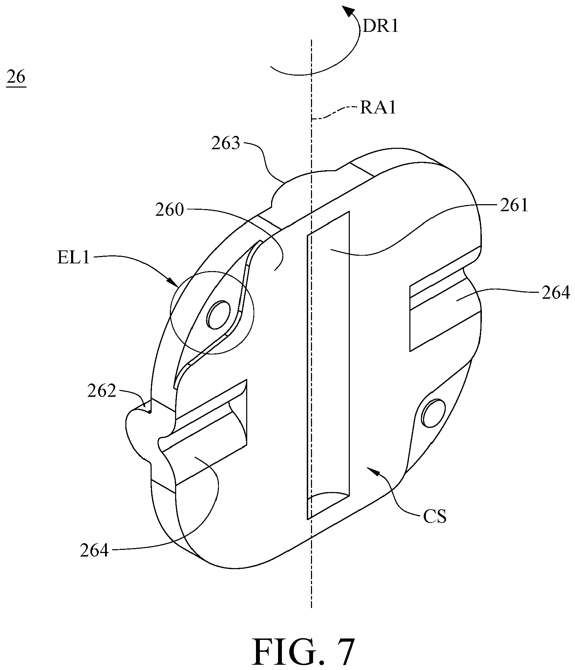

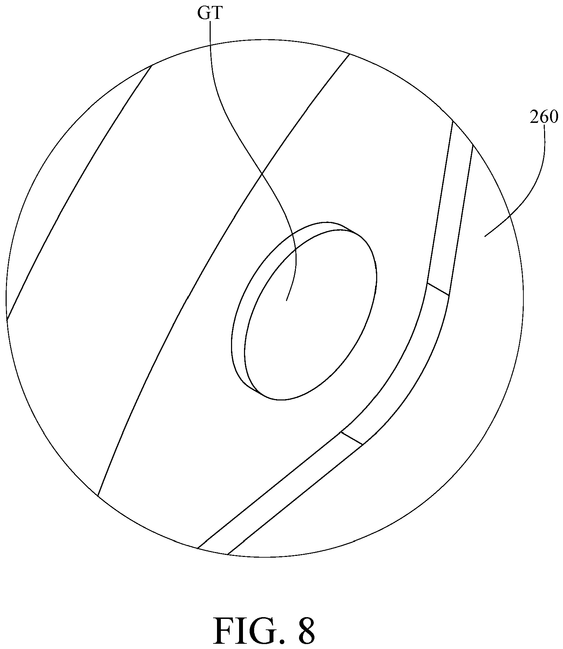

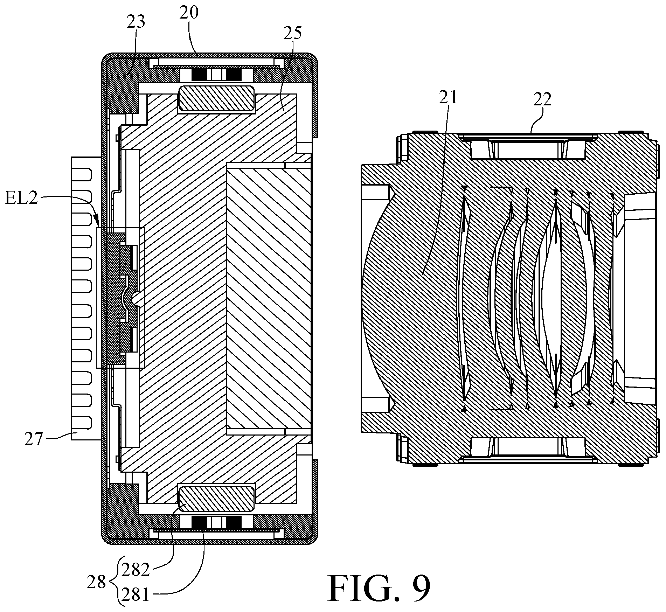

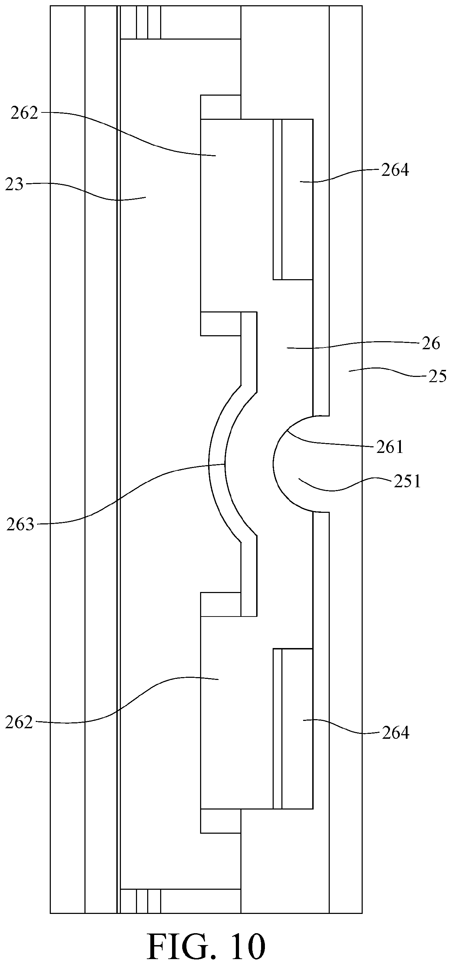

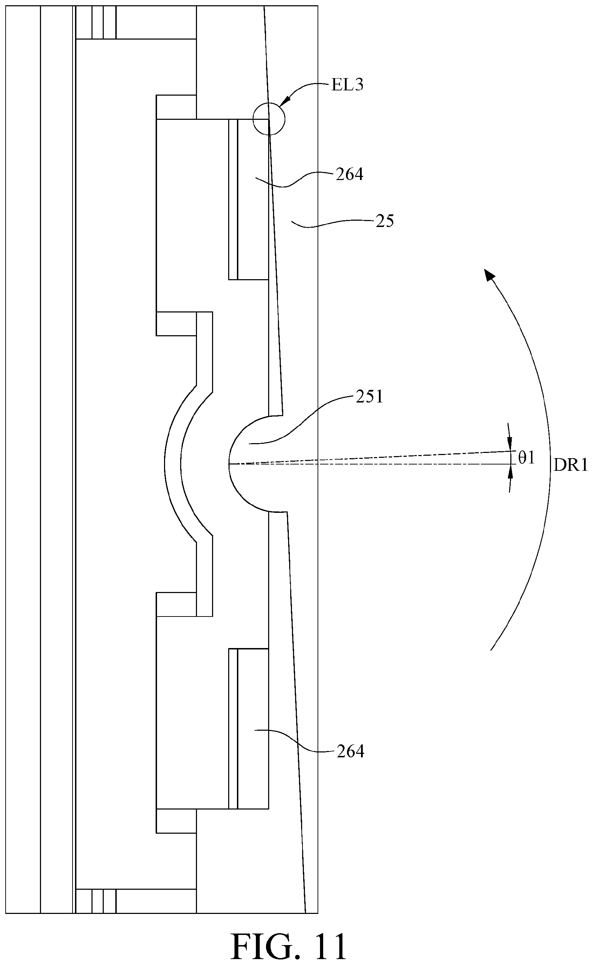

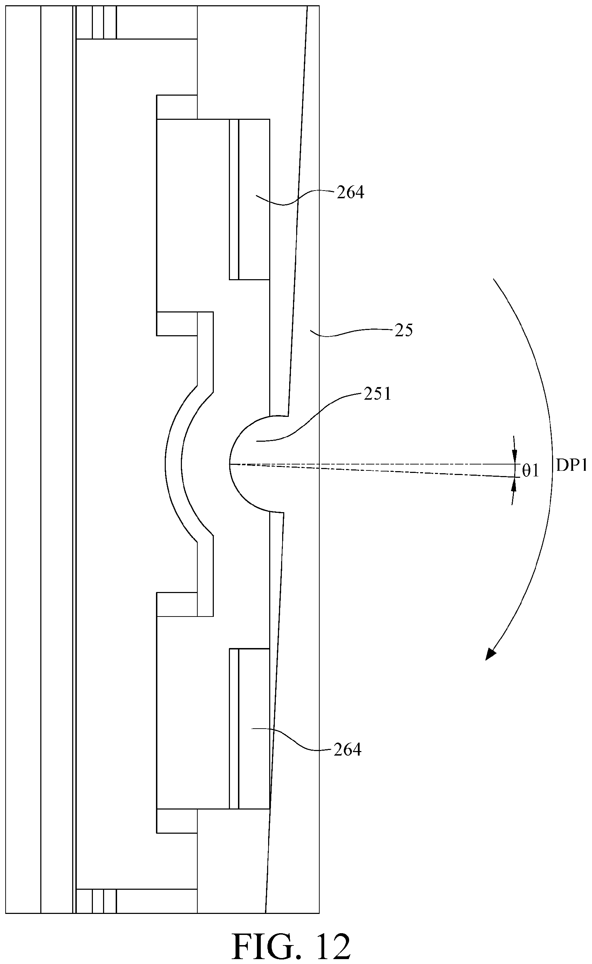

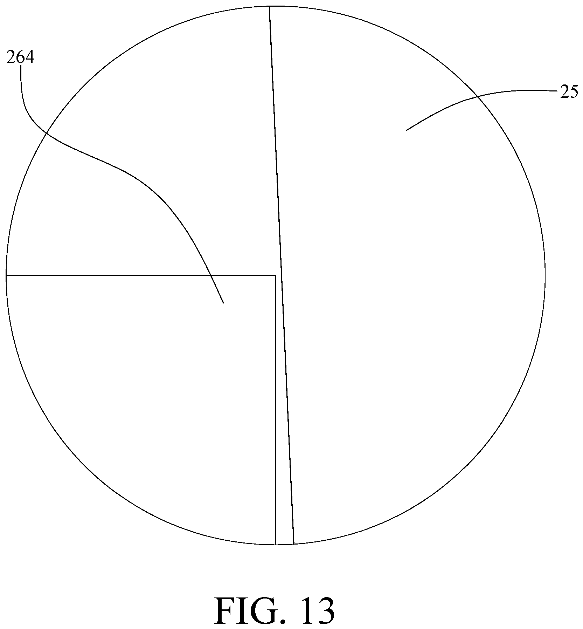

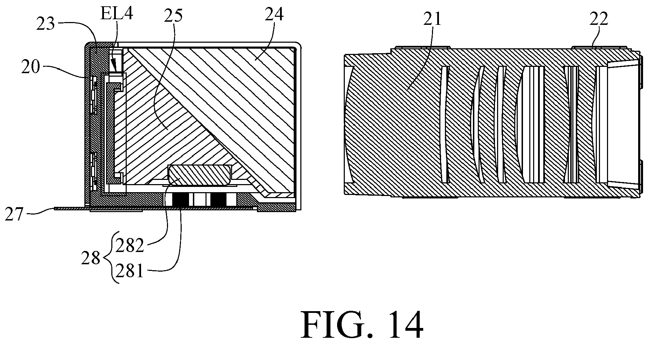

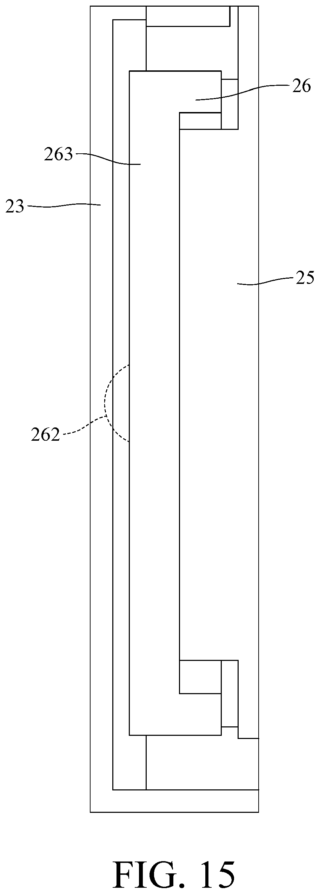

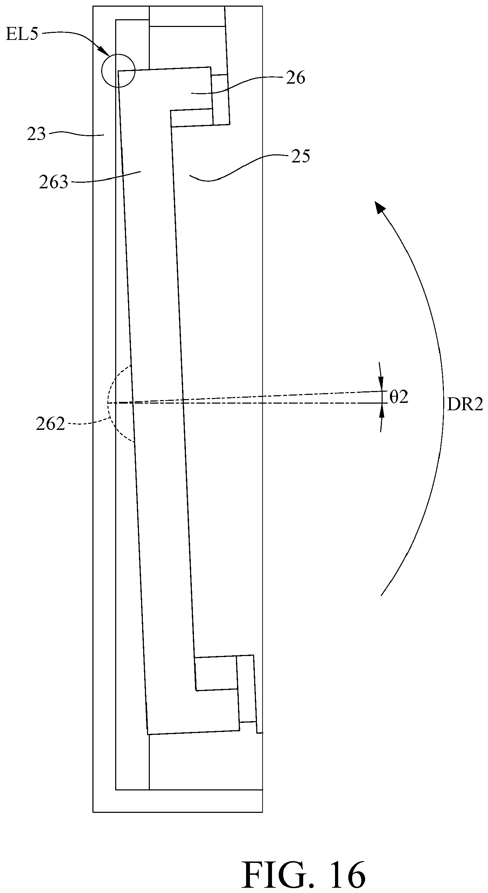

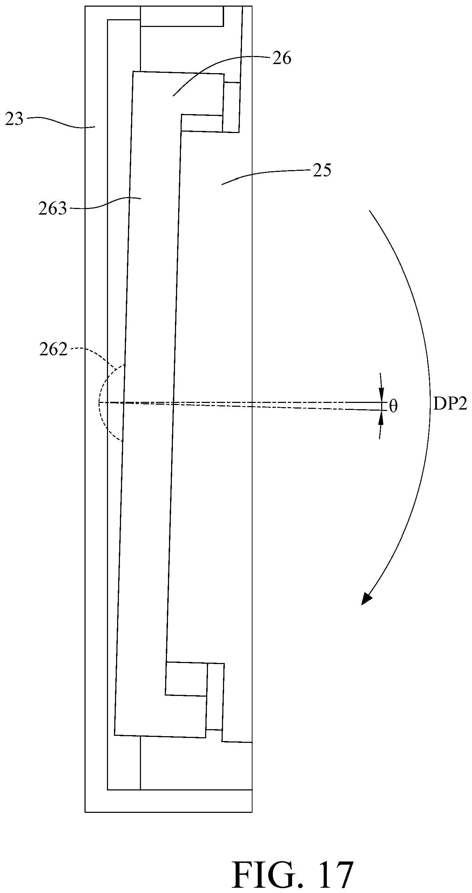

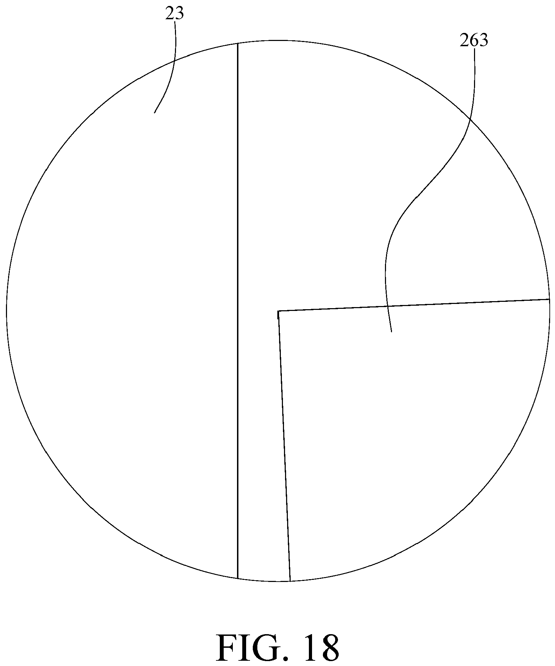

Fig. 1 is a perspective view of a camera module according to the 1st embodiment of the present disclosure, Fig. 2 is an exploded view of the camera module in Fig. 1, Fig. 3 is another exploded view of the camera module in Fig. 1, Fig. 4 is a top view of the camera module in Fig. 1, Fig. 5 is a side view of the camera module in Fig. 1, Fig. 6 is an enlarged view of a plastic swing element in Fig. 2, Fig. 7 is an enlarged view of the plastic swing element in Fig. 3, Fig. 8 is an enlarged view of region EL1 in Fig. 7, Fig. 9 is a sectional view of the camera module along line 9-9 in Fig. 5, Fig. 10 is an enlarged view of region EL2 in Fig. 9, Fig. 11 is a schematic view of a movable carrier in Fig. 10 rotated in a first rotation direction, Fig. 12 is a schematic view of the movable carrier in Fig. 10 rotated in a direction opposite to the first rotation direction, Fig. 13 is an enlarged view of region EL3 in Fig. 11, Fig. 14 is a sectional view of the camera module along line 14-14 in Fig. 4, Fig. 15 is an enlarged view of region EL4 in Fig. 14, Fig. 16 is a schematic view of the movable carrier and the plastic swing element in Fig. 15 rotated in a second rotation direction, Fig. 17 is a schematic view of the movable carrier and the plastic swing element in Fig. 15 rotated in a direction opposite to the second rotation direction, and Fig. 18 is an enlarged view of region EL5 in Fig. 16.

In this embodiment, a camera module 1 is provided. The camera module 1 includes an image stabilization lens module 2 and an image sensor ISU. In addition, the image stabilization lens module 2 includes an optical lens assembly 21, a lens holder 22, a casing 20, a fixed base 23, a light-folding element 24, a movable carrier 25, a plastic swing element 26, a flexible printed circuit board 27 and a driving mechanism 28. The image sensor ISU is disposed on an image surface of the optical lens assembly 21.

The optical lens assembly 21 includes a plurality of optical lens elements, and an optical axis passes through the optical lens elements. Furthermore, the lens holder 22 holds the optical lens elements of the optical lens assembly 21.

The light-folding element 24 is located on an object side of the lens holder 22, and the light-folding element 24 is configured to fold the optical axis. Furthermore, the light-folding element 24 is configured to redirect an incident light traveling along the optical axis towards the lens holder 22, so that the light passes through the optical lens elements of the optical lens assembly 21. In this embodiment, the light-folding element 24 is a prism.

The casing 20 is disposed on the fixed base 23, and the casing 20 and the fixed base 23 together form an accommodation space S. The movable carrier 25 is rotatably disposed in the accommodation space S and carries the light-folding element 24, and the movable carrier 25 is configured to bring the light-folding element 24 to rotate together.

The fixed base 23 is connected to the movable carrier 25 via an elastic element EC, and the elastic element EC exerts a preload force on the movable carrier 25 in a direction towards the fixed base 23.

The plastic swing element 26 is disposed between the movable carrier 25 and the fixed base 23, and the plastic swing element 26 is in physical contact with the movable carrier 25 and the fixed base 23. In specific, as shown in Fig. 2, Fig. 3, Fig. 6 and Fig. 7, the plastic swing element 26 includes a main body 260, a carrier support structure 261, a base support structure 262, a carrier auxiliary structure 263 and a base auxiliary structure 264. Additionally, the main body 260 has a carrier corresponsive surface CS facing the movable carrier 25 and a base corresponsive surface BS facing the fixed base 23.

The carrier support structure 261 is disposed on the carrier corresponsive surface CS, the carrier support structure 261 supports and is connected to the movable carrier 25, and the carrier support structure 261 is in physical contact with the movable carrier 25. In detail, as shown in Fig. 7 and Fig. 10, the carrier support structure 261 consists of a cylindrical recess, and the cross-section of the cylindrical recess is in an arc shape and has a particular curvature radius. In addition, as shown in Fig. 2 and Fig. 10, the movable carrier 25 has a cylindrical protrusion 251 corresponding to the carrier support structure 261, and the cylindrical protrusion 251 is rotatably disposed in the cylindrical recess of the carrier support structure 261. Moreover, the cylindrical recess of the carrier support structure 261 supports and is in physical contact with the cylindrical protrusion 251. Furthermore, as shown in Fig. 7, Fig. 11 and Fig. 12, the carrier support structure 261 has a first rotation axis RA1, and the movable carrier 25 is rotatable relative to the fixed base 23 around the first rotation axis RA1 in a first rotation direction DR1 or a direction DP1 opposite to the first rotation direction DR1 (e.g., a yaw direction of the movable carrier 25). In this embodiment, the first rotation axis RA1 is located in a connection line of contact points between the cylindrical protrusion 251 of the movable carrier 25 and the cylindrical recess of the carrier support structure 261.

The base support structure 262 is disposed on the base corresponsive surface BS, and the base support structure 262 is connected to the fixed base 23, so that the fixed base 23 supports the plastic swing element 26. Moreover, the base support structure 262 is in physical contact with the fixed base 23. In detail, as shown in Fig. 2 and Fig. 6, the base support structure 262 consists of two cylindrical protrusions. In addition, as shown in Fig. 3, the fixed base 23 has two cylindrical recesses 231 corresponding to the base support structure 262, and the cylindrical protrusions of the base support structure 262 are respectively and rotatably disposed in the cylindrical recesses 231 of the fixed base 23. Moreover, the cylindrical recesses 231 of the fixed base 23 supports and is in physical contact with the cylindrical protrusions of the base support structure 262. Furthermore, as shown in Fig. 6, Fig. 16 and Fig. 17, the base support structure 262 has a second rotation axis RA2, and the movable carrier 25, via the plastic swing element 26, is rotatable relative to the fixed base 23 around the second rotation axis RA2 in a second rotation direction DR2 or a direction DP2 opposite to the second rotation direction DR2 (e.g., a pitch direction of the movable carrier 25). In this embodiment, the second rotation axis RA2 is located in a connection line of contact points between the cylindrical recesses 231 of the fixed base 23 and the cylindrical protrusions of the base support structure 262. In addition, as shown in Fig. 6 and Fig. 7, the first rotation axis RA1 is orthogonal to the second rotation axis RA2.

The carrier auxiliary structure 263 is disposed on the base corresponsive surface BS, and the carrier auxiliary structure 263 is disposed opposite to the carrier support structure 261. In addition, as shown in Fig. 3 and Fig. 7, the carrier auxiliary structure 263 overlaps the carrier support structure 261 in a direction parallel to a part of the optical axis on the image side of the light-folding element 24, wherein the part of the optical axis on the image side of the light-folding element 24 can be defined as in a region where the optical axis, which has been folded by the light-folding element 24, extends. In this embodiment, a first block mechanism is formed between the carrier auxiliary structure 263 and the fixed base 23. In detail, as shown in Fig. 16 to Fig. 18, after the plastic swing element 26 is driven (e.g., brought by the movable carrier 25) to rotate a certain angle θ2 in the second rotation direction DR2 or the opposite direction DP2, the carrier auxiliary structure 263 on the base corresponsive surface BS comes into contact with the fixed base 23, such that the fixed base 23 blocks the carrier auxiliary structure 263 so as to stop the rotation of the plastic swing element 26.

The base auxiliary structure 264 is disposed on the carrier corresponsive surface CS, and the base auxiliary structure 264 is disposed opposite to the base support structure 262. In addition, as shown in Fig. 3 and Fig. 7, the base auxiliary structure 264 overlaps the base support structure 262 in the direction parallel to the part of the optical axis on the image side of the light-folding element 24. In this embodiment, a second block mechanism is formed between the base auxiliary structure 264 and the movable carrier 25. In detail, as shown in Fig. 11 to Fig. 13, after the movable carrier 25 is driven to rotate a certain angle θ1 in the first rotation direction DR1 or the opposite direction DP1, the movable carrier 25 comes into contact with the base auxiliary structure 264 on the carrier corresponsive surface CS, such that the base auxiliary structure 264 blocks the movable carrier 25 so as to stop the rotation of the movable carrier 25.

In this embodiment, the plastic swing element 26 is one-piece formed by plastic injection molding, and the carrier auxiliary structure 263, the base auxiliary structure 264 and the main body 260 of the plastic swing element 26 are formed in one piece. As shown in Fig. 7 and Fig. 8, the main body 260 of the plastic swing element 26 has two gate traces GT.

The flexible printed circuit board 27 is attached to the fixed base 23.

The driving mechanism 28 is configured to drive the movable carrier 25 to rotate relative to the fixed base 23 in the first rotation direction DR1 (and the opposite direction DP1) and/or the second rotation direction DR2 (and the opposite direction DP2), so that the light-folding element 24 disposed on the movable carrier 25 can be rotated together relative to the fixed base 23. In specific, as shown in Fig. 2 and Fig. 3, the driving mechanism 28 includes three coils 281 and three magnets 282 disposed corresponding to each other. The magnets 282 are disposed on the movable carrier 25, and the coils 281 are disposed on the flexible printed circuit board 27 and therefore, are indirectly disposed on the fixed base 23. The flexible printed circuit board 27 is configured to provide a driving current to the coils 281, so that an interaction between the coils 281 and the magnets 282 can drive the movable carrier 25 to rotate around the first rotation axis RA1 in the first rotation direction DR1 or the opposite direction DP1 (as shown in Fig. 7, Fig. 11 and Fig. 12), and also can drive the movable carrier 25 to rotate around the second rotation axis RA2 in the second rotation direction DR2 or the opposite direction DP2 (as shown in Fig. 6, Fig. 16 and Fig. 17).

When a maximum field of view of the optical lens assembly 21 is FOV, the following condition is satisfied: 1 degree < FOV < 50 degrees.

### 2nd Embodiment

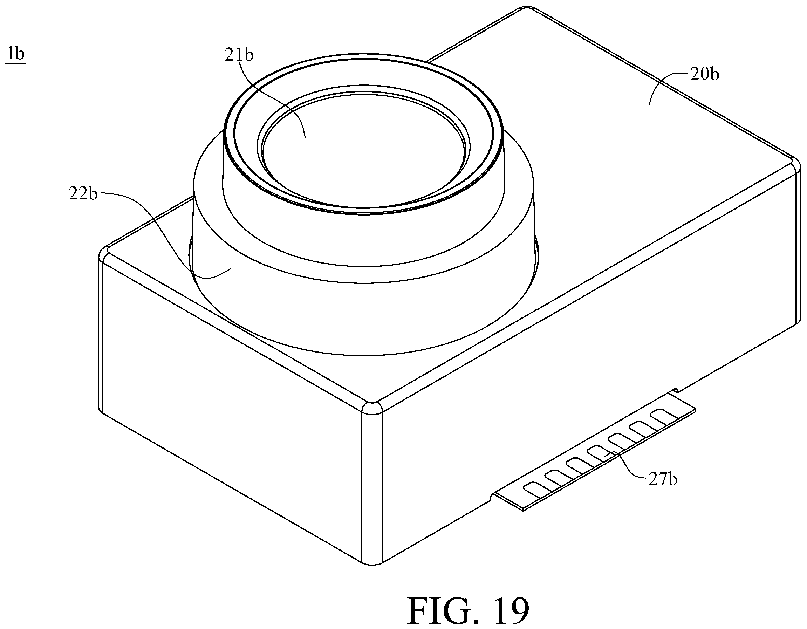

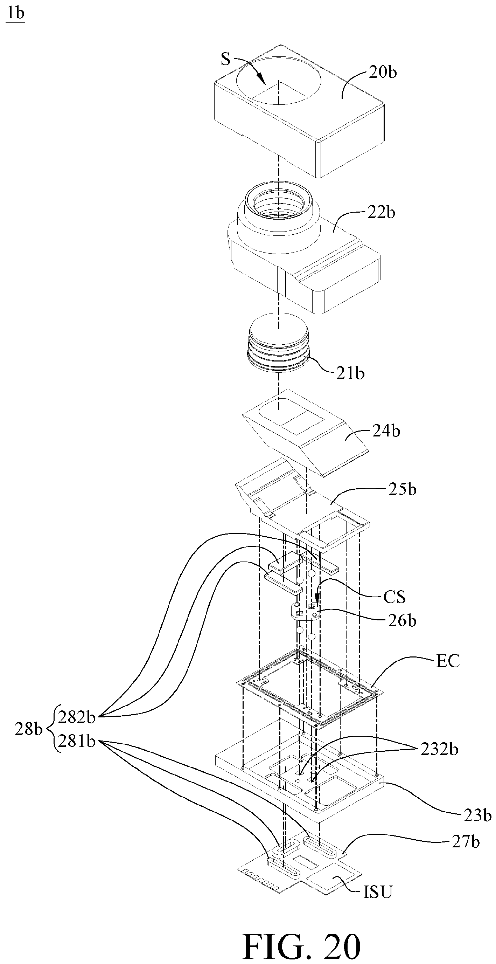

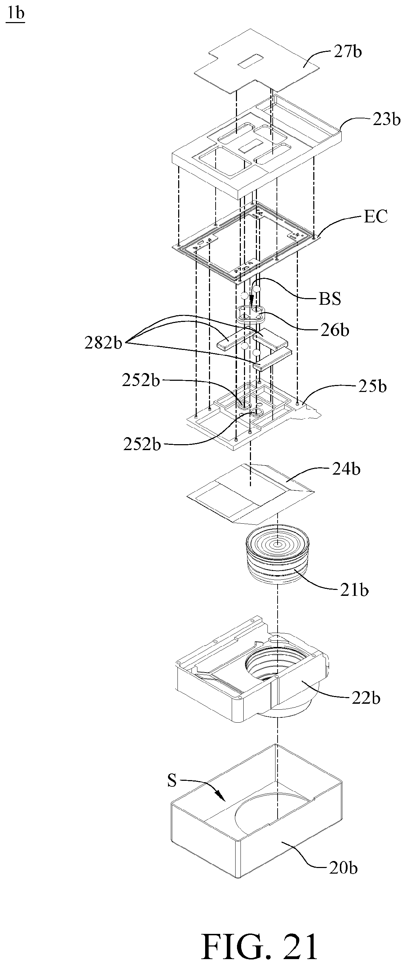

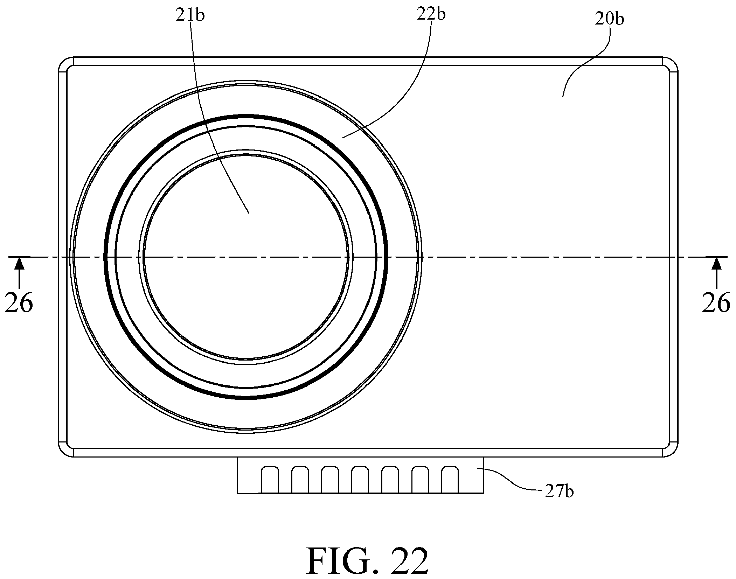

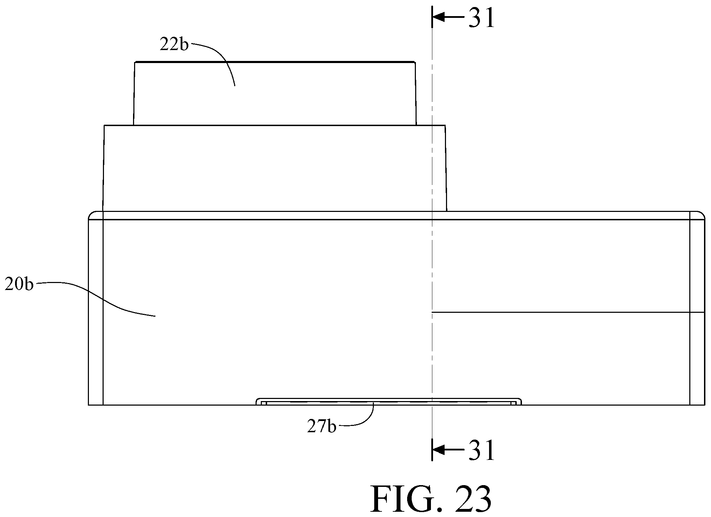

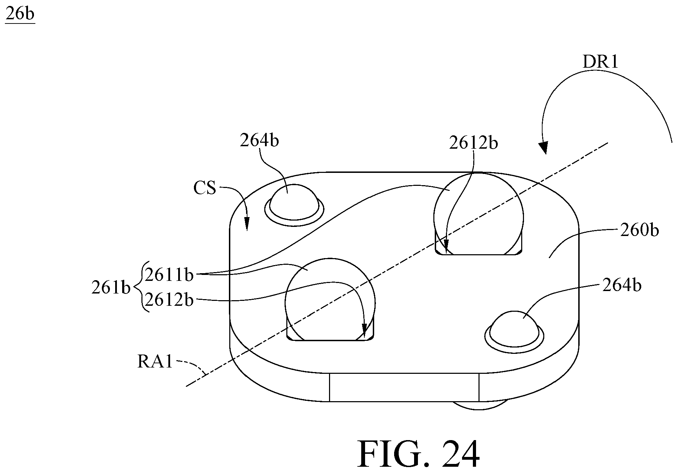

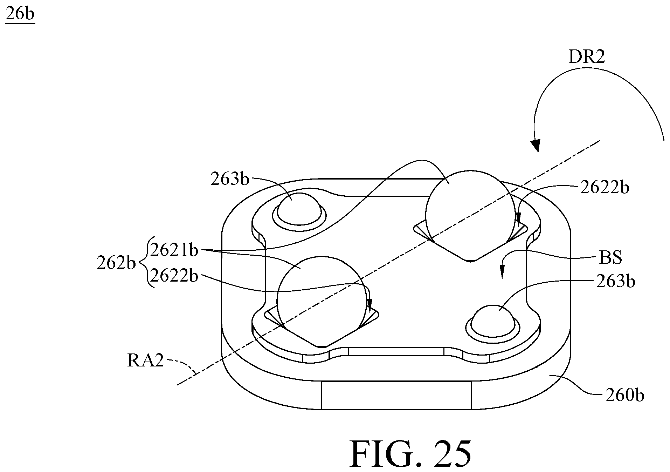

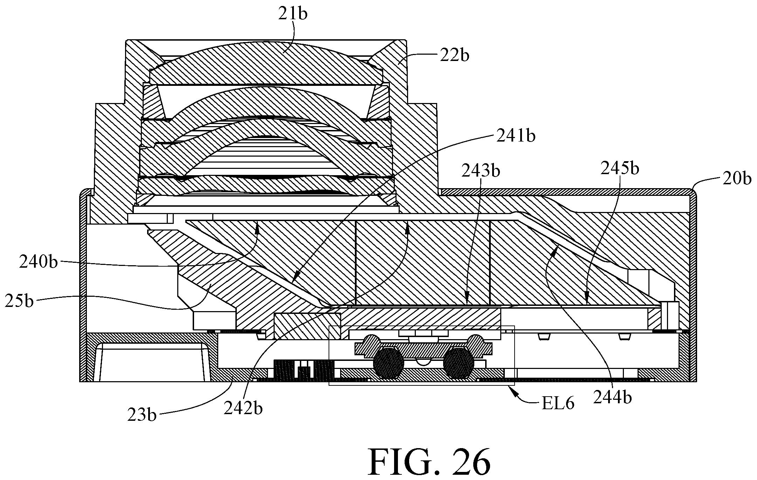

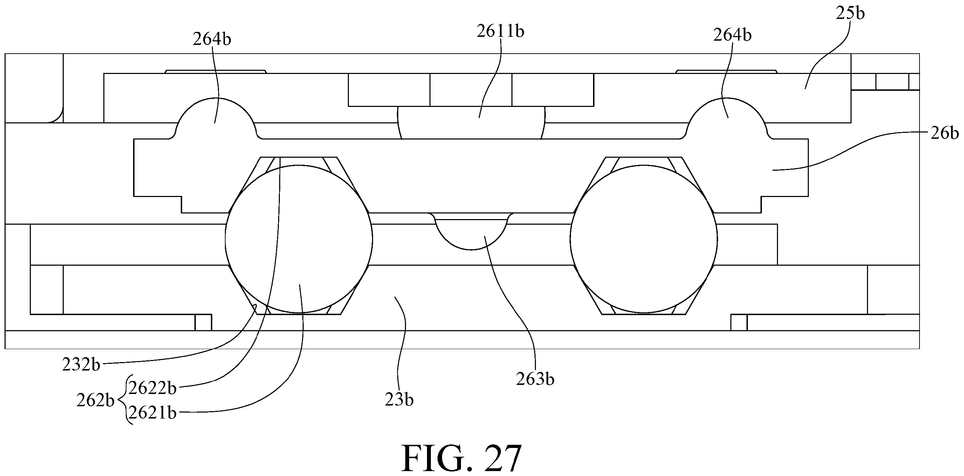

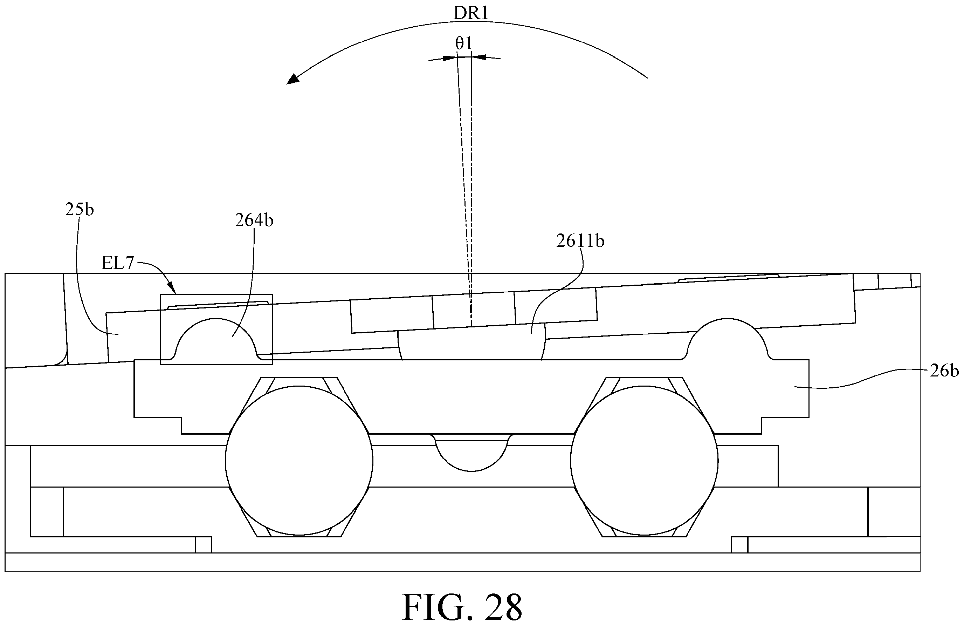

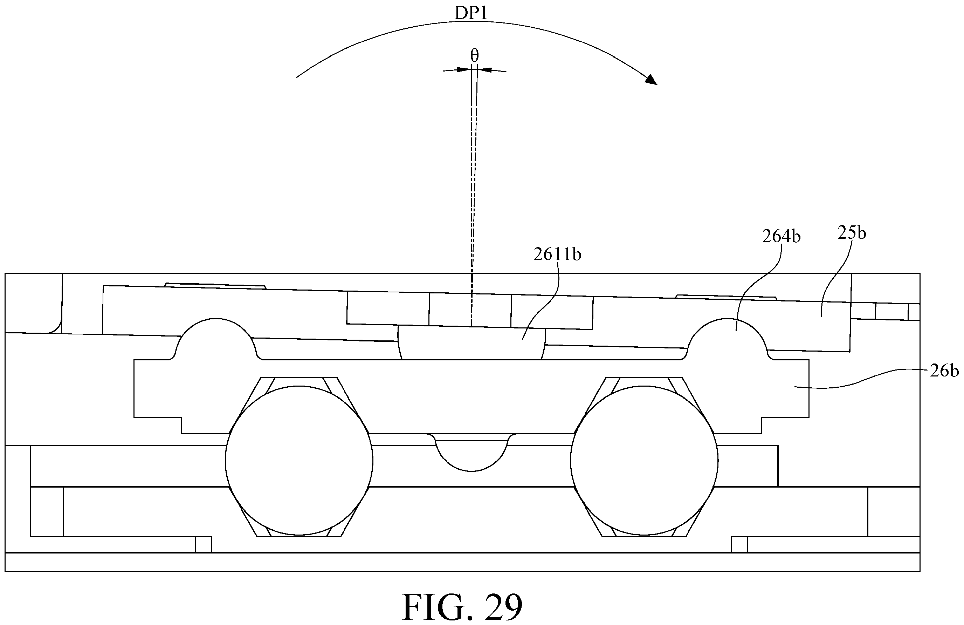

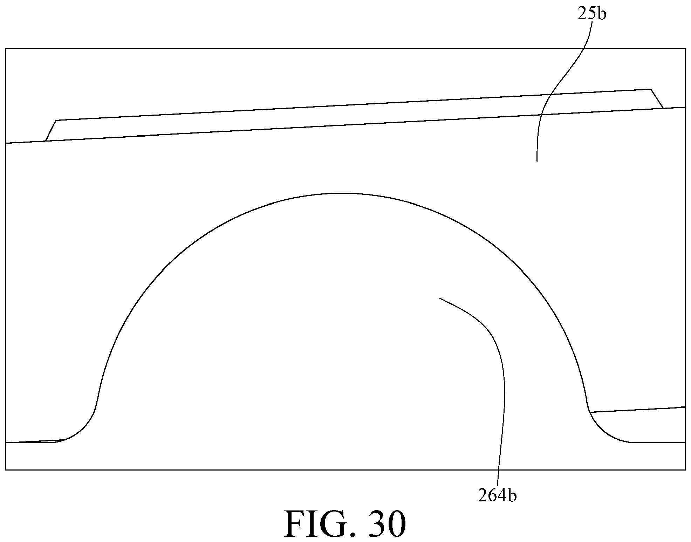

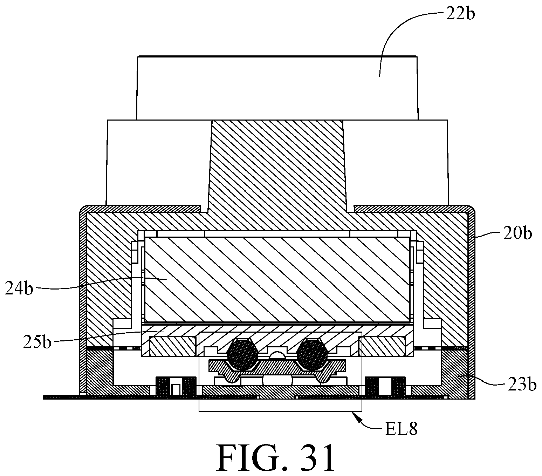

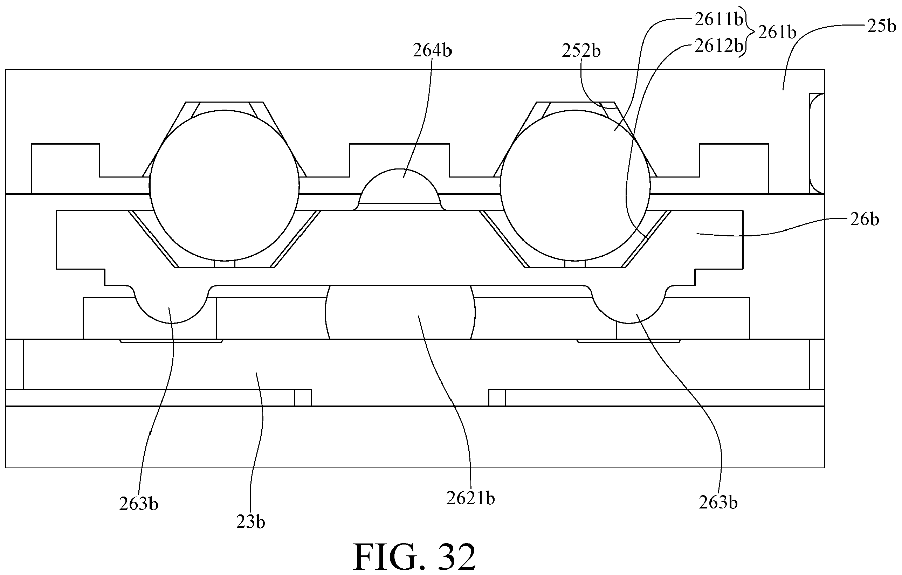

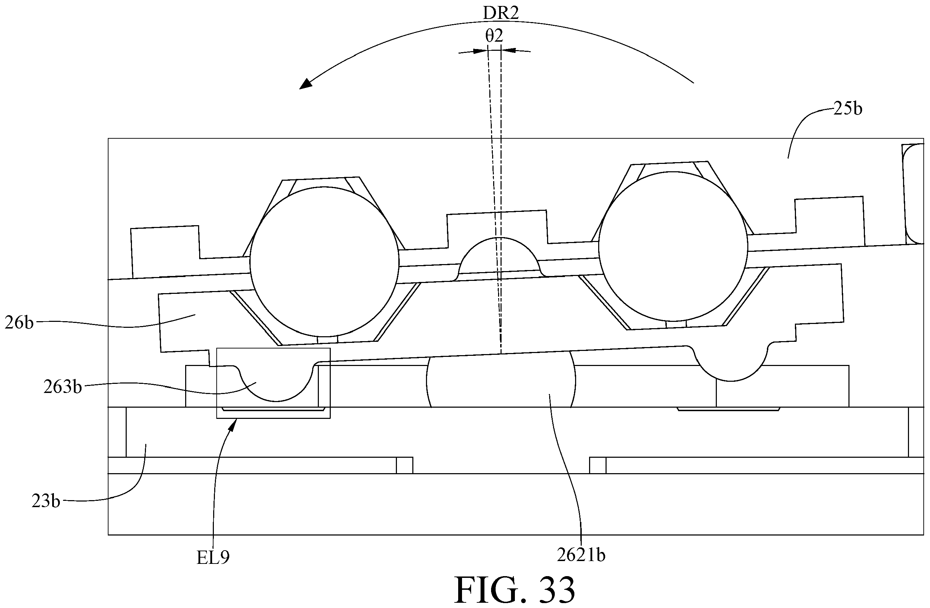

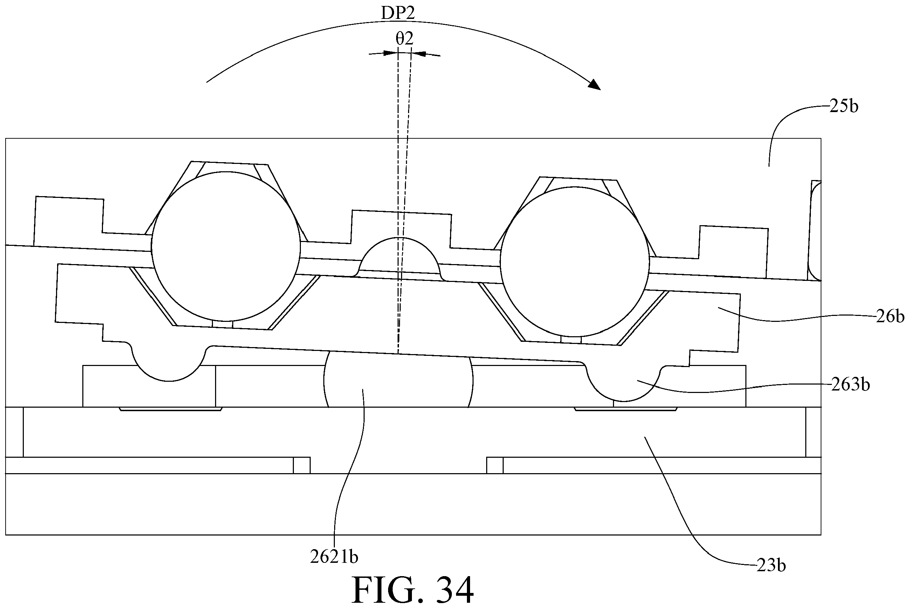

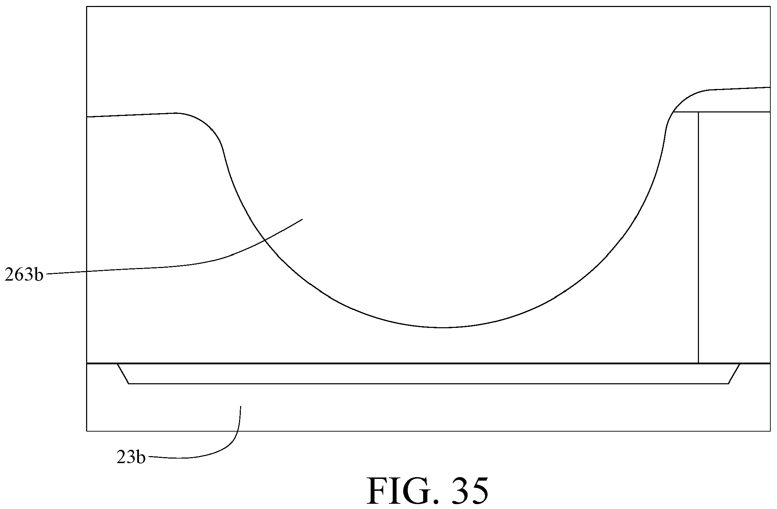

Fig. 19 is a perspective view of a camera module according to the 2nd embodiment of the present disclosure, Fig. 20 is an exploded view of the camera module in Fig. 19, Fig. 21 is another exploded view of the camera module in Fig. 19, Fig. 22 is a top view of the camera module in Fig. 19, Fig. 23 is a side view of the camera module in Fig. 19, Fig. 24 is an enlarged view of a swing element in Fig. 20, Fig. 25 is an enlarged view of the swing element in Fig. 21, Fig. 26 is a sectional view of the camera module along line 26-26 in Fig. 22, Fig. 27 is an enlarged view of region EL6 in Fig. 26, Fig. 28 is a schematic view of a movable carrier in Fig. 27 rotated in a first rotation direction, Fig. 29 is a schematic view of the movable carrier in Fig. 27 rotated in a direction opposite to the first rotation direction, Fig. 30 is an enlarged view of region EL7 in Fig. 28, Fig. 31 is a sectional view of the camera module along line 31-31 in Fig. 23, Fig. 32 is an enlarged view of region EL8 in Fig. 31, Fig. 33 is schematic view of the movable carrier and the swing element in Fig. 32 rotated in a second rotation direction, Fig. 34 is schematic view of the movable carrier and the swing element in Fig. 32 rotated in a direction opposite to the second rotation direction, and Fig. 35 is an enlarged view of region EL9 in Fig. 33.

In this embodiment, a camera module 1b is provided. The camera module 1b includes an image stabilization lens module 2b and an image sensor ISU. In addition, the image stabilization lens module 2b includes a casing 20b, a fixed base 23b, an optical lens assembly 21b, a lens holder 22b, a light-folding element 24b, a movable carrier 25b, a swing element 26b, a flexible printed circuit board 27b and a driving mechanism 28b. The image sensor ISU is disposed on an image surface of the optical lens assembly 21b.

The casing 20b is disposed on the fixed base 23b, and the casing 20b and the fixed base 23b together form an accommodation space S for the optical lens assembly 21b, the lens holder 22b, the light-folding element 24b, the movable carrier 25b, the swing element 26b and the driving mechanism 28b to be disposed therein.

The optical lens assembly 21b includes a plurality of optical lens elements, and an optical axis passes through the optical lens elements. Furthermore, the lens holder 22b holds the optical lens elements of the optical lens assembly 21b.

The light-folding element 24b is located on an image side of the lens holder 22b, and the light-folding element 24b is configured to fold the optical axis. Furthermore, the light-folding element 24b is configured to redirect light coming from the optical lens assembly 21b. As shown in Fig. 26, the light-folding element 24b includes a light receive surface 240b, four reflection surfaces 241b, 242b, 243b and 244b, and a light exit surface 245b. Light coming from the optical lens assembly 21b enters the light-folding element 24b from the light receive surface 240b, the reflection surfaces 241b, 242b, 243b and 244b are configured to reflect the light coming from the light receive surface 240b so as to redirect the light, and the light exits the light-folding element 24b from the light exit surface 245b. The light-folding element 24b has several reflection surfaces (i.e., the reflection surfaces 241b, 242b, 243b and 244b) so as to fold the optical axis and redirect light multiple times. In addition, light respectively undergoes total internal reflection at the two reflection surfaces 242b and 243b of the light-folding element 24b. In this embodiment, the light-folding element 24b can be a prism being one-piece formed, or can include a plurality of prisms that are cemented or assembled together, but the present disclosure is not limited thereto.

The movable carrier 25b carries the light-folding element 24b, and the movable carrier 25b is configured to bring the light-folding element 24b to rotate together.

The fixed base 23b is connected to the movable carrier 25b via an elastic element EC, and the elastic element EC exerts a preload force on the movable carrier 25b in a direction towards the fixed base 23b.

The swing element 26b is disposed between the movable carrier 25b and the fixed base 23b, and the swing element 26b is in physical contact with the movable carrier 25b and the fixed base 23b. In specific, as shown in Fig. 20, Fig. 21, Fig. 24 and Fig. 25, the swing element 26b includes a main body 260b, a carrier support structure 261b, a base support structure 262b, a carrier auxiliary structure 263b and a base auxiliary structure 264b. The main body 260b has a carrier corresponsive surface CS facing the movable carrier 25b and a base corresponsive surface BS facing the fixed base 23b.

The carrier support structure 261b is disposed on the carrier corresponsive surface CS, the carrier support structure 261b supports and is connected to the movable carrier 25b, and the carrier support structure 261b is in physical contact with the movable carrier 25b. In detail, as shown in Fig. 20 and Fig. 24, the carrier support structure 261b consists of two balls 2611b and two conical recesses 2612b, the conical recesses 2612b are formed on the carrier corresponsive surface CS, and the balls 2611b are respectively in physical contact with the conical recesses 2612b. Moreover, each of the conical recesses 2612b consists of multiple flat surfaces that are tangent to the surface of the balls 2611b, thus having a conical appearance. In addition, as shown in Fig. 21 and Fig. 32, the movable carrier 25b has two conical recesses 252b corresponding to the carrier support structure 261b, and the balls 2611b of the carrier support structure 261b are respectively and rotatably disposed in the conical recesses 252b of the movable carrier 25b. Moreover, the balls 2611b of the carrier support structure 261b support and are in physical contact with the conical recesses 252b of the movable carrier 25b. Furthermore, as shown in Fig. 24, Fig. 28 and Fig. 29, the carrier support structure 261b has a first rotation axis RA1, and the movable carrier 25b is rotatable relative to the fixed base 23b around the first rotation axis RA1 in a first rotation direction DR1 or a direction DP1 opposite to the first rotation direction (e.g., a pitch direction of the movable carrier 25b). In this embodiment, the first rotation axis RA1 is located in a connection line of the centers of the two balls 2611b of the carrier support structure 261b.

The base support structure 262b is disposed on the base corresponsive surface BS, and the base support structure 262b is connected to the fixed base 23b, so that the fixed base 23b supports the swing element 26b. Moreover, the base support structure 262b is in physical contact with the fixed base 23b. In detail, as shown in Fig. 21 and Fig. 25, the base support structure 262b consists of two balls 2621b and two conical recesses 2622b, the conical recesses 2622b are formed on the base corresponsive surface BS, and the balls 2621b are respectively in physical contact with the conical recesses 2622b. Moreover, each of the conical recesses 2622b can consist of multiple flat surfaces that are tangent to the surface of the balls 2621b, thus having a conical appearance, but the present disclosure is not limited thereto. In addition, as shown in Fig. 20 and Fig. 27, the fixed base 23b has two conical recesses 232b corresponding to the base support structure 262b, and the balls 2621b of the base support structure 262b are respectively and rotatably disposed in the conical recesses 232b of the fixed base 23b. Moreover, the conical recesses 232b of the fixed base 23b support and are in physical contact with the balls 2621b of the base support structure 262b. Furthermore, as shown in Fig. 25, Fig. 33 and Fig. 34, the base support structure 262b has a second rotation axis RA2, and the movable carrier 25b, via the swing element 26b, is rotatable relative to the fixed base 23b around the second rotation axis RA2 in a second rotation direction DR2 or a direction DP2 opposite to the second rotation direction DR2 (e.g., a yaw direction of the movable carrier 25b). In this embodiment, the second rotation axis RA2 is located in a connection line of the centers of the two balls 2621b of the base support structure 262b. In addition, the first rotation axis RA1 is orthogonal to the second rotation axis RA2.

The carrier auxiliary structure 263b is disposed on the base corresponsive surface BS, and the carrier auxiliary structure 263b is disposed opposite to the carrier support structure 261b. In addition, as shown in Fig. 21 and Fig. 25, the carrier auxiliary structure 263b overlaps the carrier support structure 261b in a direction parallel to a part of the optical axis on the object side of the light-folding element 24b, wherein the part of the optical axis on the object side of the light-folding element 24b can be defined as in a region where the optical axis, which has not yet been folded by the light-folding element 24b, extends. In this embodiment, a first block mechanism is formed between the carrier auxiliary structure 263b and the fixed base 23b. In detail, as shown in Fig. 33 to Fig. 35, after the swing element 26b is driven (e.g., brought by the movable carrier 25b) to rotate a certain angle θ2 in the second rotation direction DR2 or the opposite direction DP2, the carrier auxiliary structure 263b on the base corresponsive surface BS comes into contact with the fixed base 23b, such that the fixed base 23b blocks the carrier auxiliary structure 263b so as to stop the rotation of the swing element 26b.

The base auxiliary structure 264b is disposed on the carrier corresponsive surface CS, and the base auxiliary structure 264b is disposed opposite to the base support structure 262b. In addition, as shown in Fig. 20 and Fig. 24, the base auxiliary structure 264b overlaps the base support structure 262b in the direction parallel to the part of the optical axis on the object side of the light-folding element 24b. In this embodiment, a second block mechanism is formed between the base auxiliary structure 264b and the movable carrier 25b. In detail, as shown in Fig. 28 to Fig. 30, after the movable carrier 25b is driven to rotate a certain angle θ1 in the first rotation direction DR1 or the opposite direction DP1, the movable carrier 25b on the carrier corresponsive surface CS comes into contact with the base auxiliary structure 264b, such that the base auxiliary structure 264b blocks the movable carrier 25b so as to stop the rotation of the movable carrier 25b.

In this embodiment, the carrier auxiliary structure 263b, the base auxiliary structure 264b and the main body 260b of the swing element 26b are formed in one piece.

The flexible printed circuit board 27b is attached to the fixed base 23b. In this embodiment, the image sensor ISU is disposed on the flexible printed circuit board 27b.

The driving mechanism 28b is configured to drive the movable carrier 25b to rotate relative to the fixed base 23b in the first rotation direction DR1 (and the opposite direction DP1) and/or the second rotation direction DR2 (and the opposite direction DP2), so that the light-folding element 24b disposed on the movable carrier 25b can be rotated together relative to the fixed base 23b. In specific, as shown in Fig. 20 and Fig. 21, the driving mechanism 28b includes three coils 281b and three magnets 282b disposed corresponding to each other. The magnets 282b are disposed on the movable carrier 25b, and the coils 281b are disposed on the flexible printed circuit board 27b and therefore, are indirectly disposed on the fixed base 23b. The flexible printed circuit board 27b is configured to provide a driving current to the coils 281b, so that an interaction between the coils 281b and the magnets 282b can drive the movable carrier 25b to rotate around the first rotation axis RA1 in the first rotation direction DR1 or the opposite direction DP1 (as shown in Fig. 24, Fig. 28 and Fig. 29), and also can drive the movable carrier 25b to rotate around the second rotation axis RA2 in the second rotation direction DR2 or the opposite direction DP2 (as shown in Fig. 25, Fig. 33 and Fig. 34).

When a maximum field of view of the optical lens assembly 21b is FOV, the following condition is satisfied: 1 degree < FOV < 50 degrees.

### 3rd Embodiment

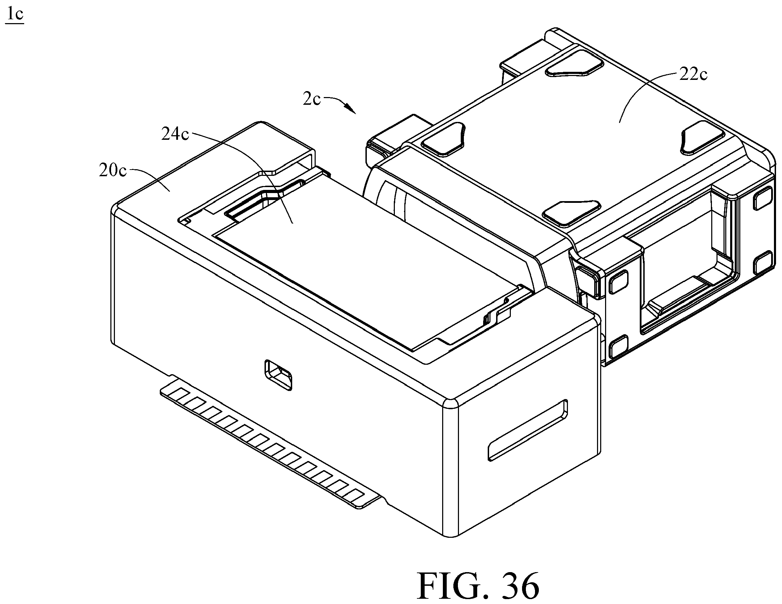

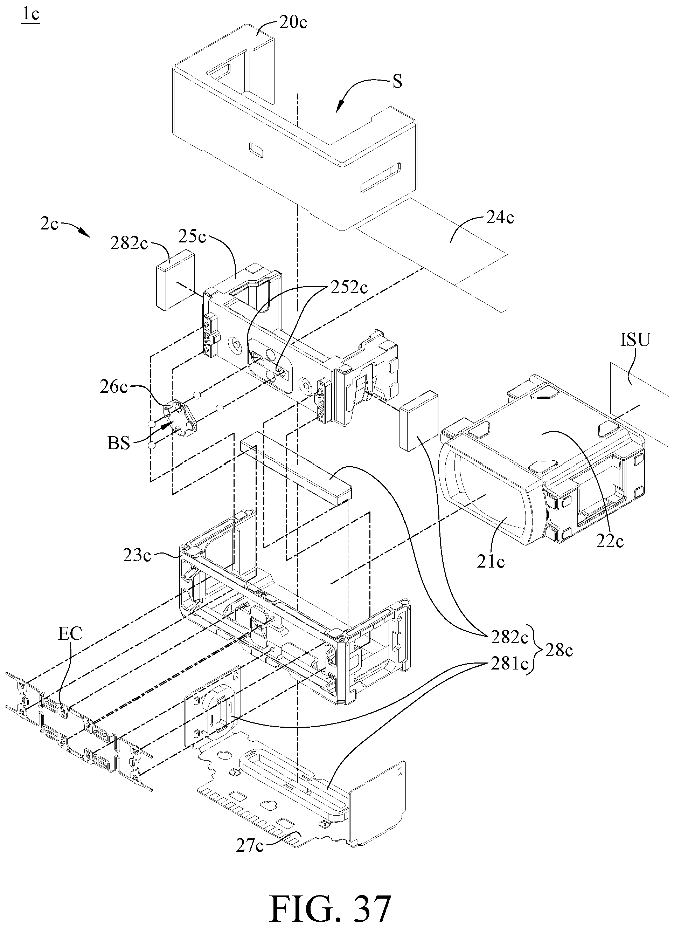

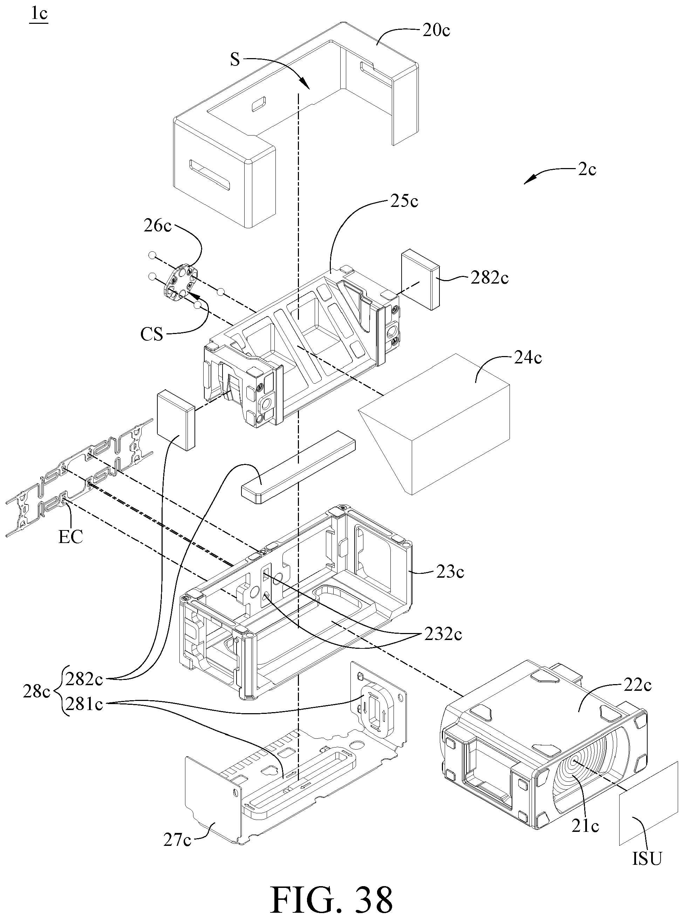

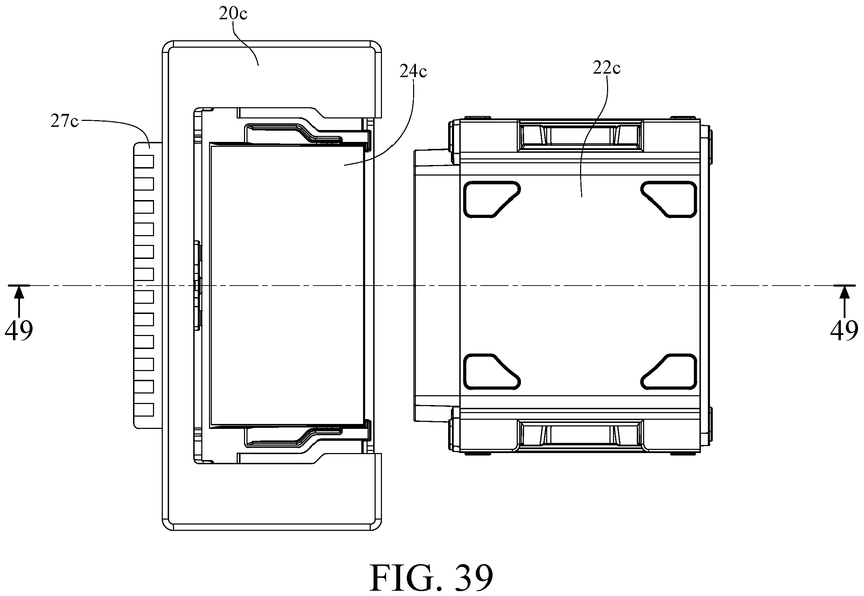

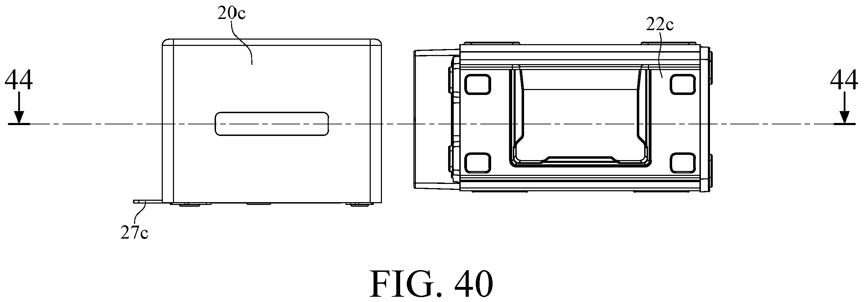

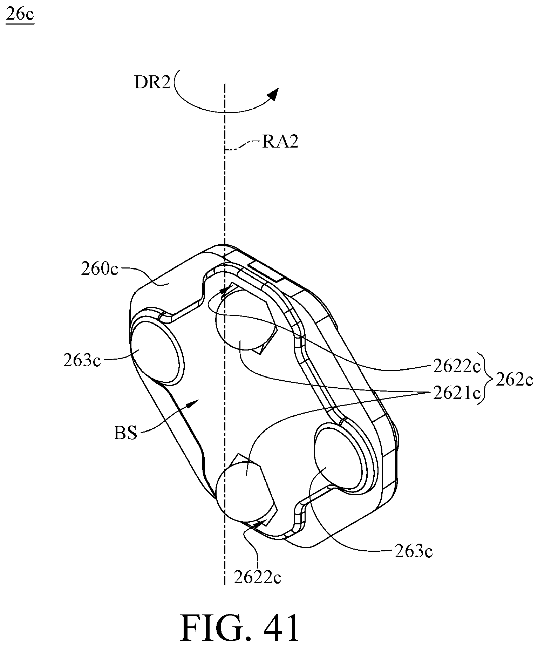

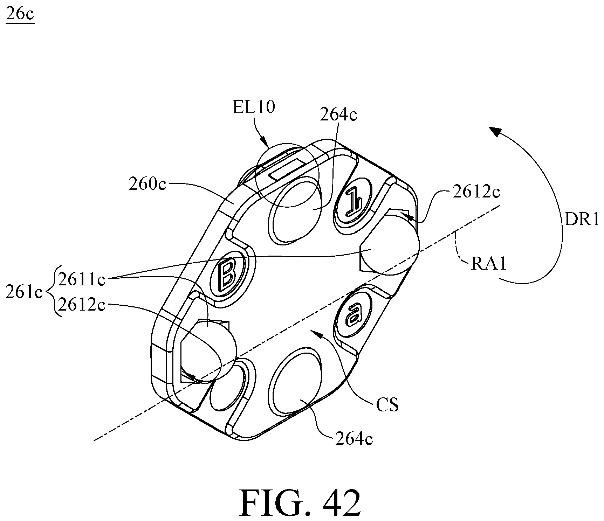

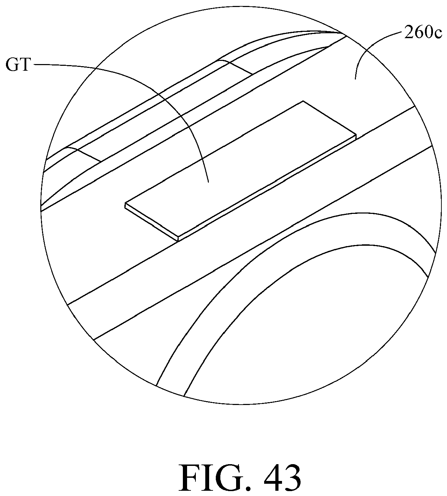

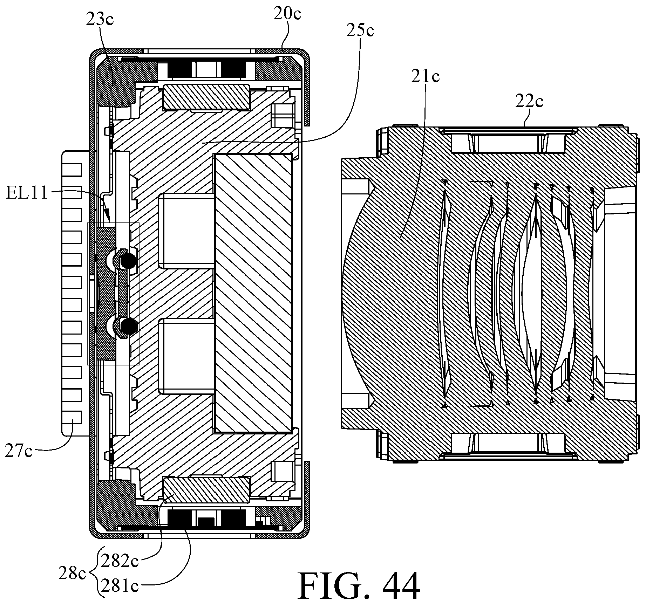

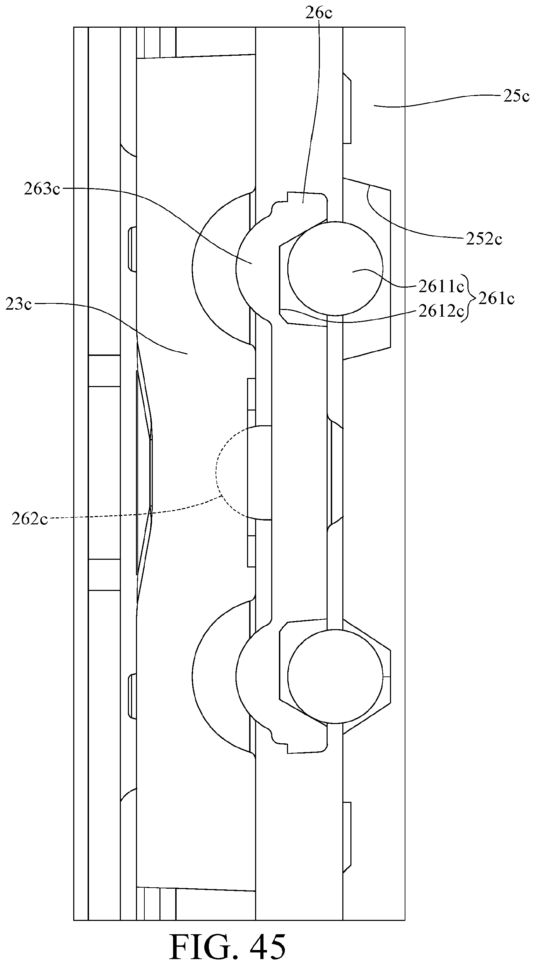

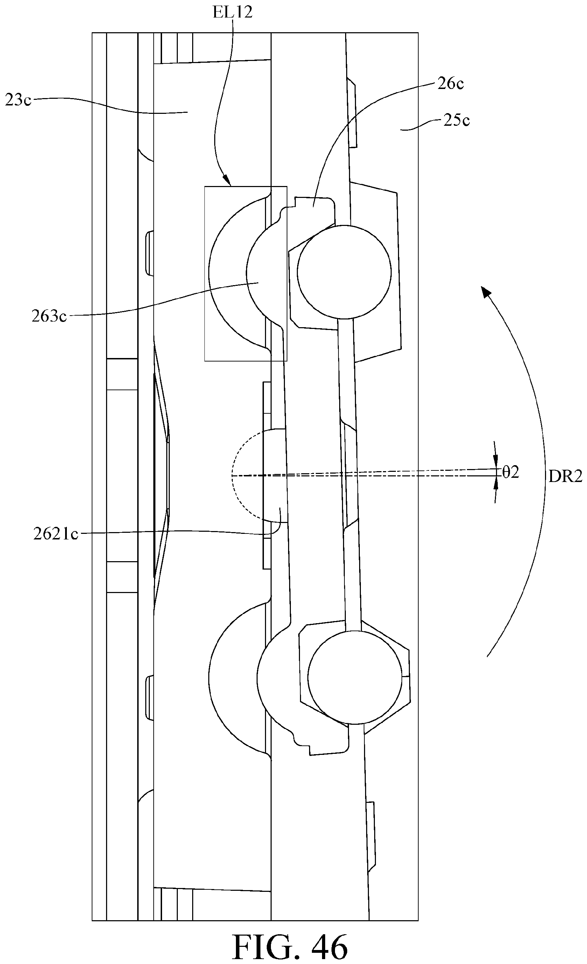

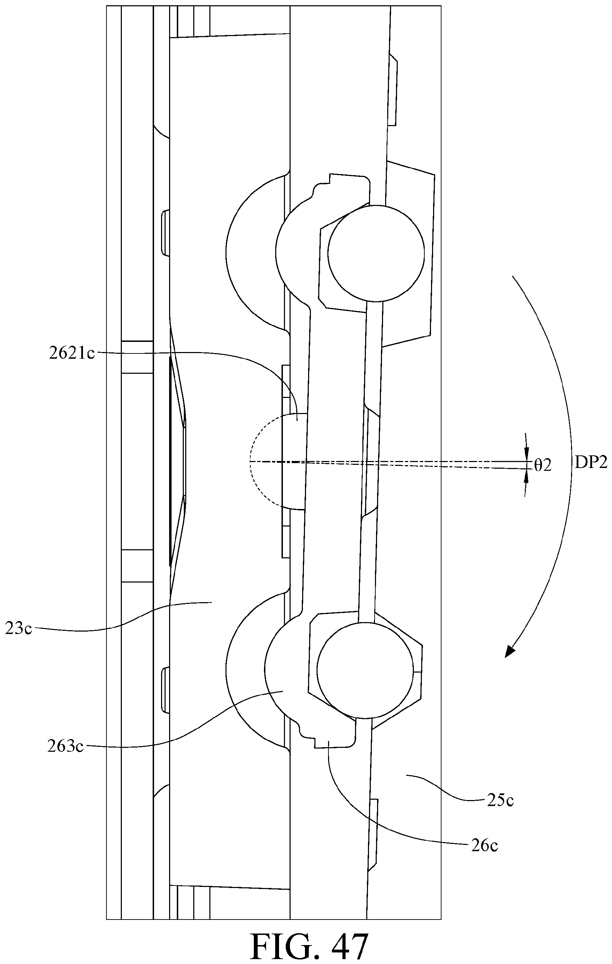

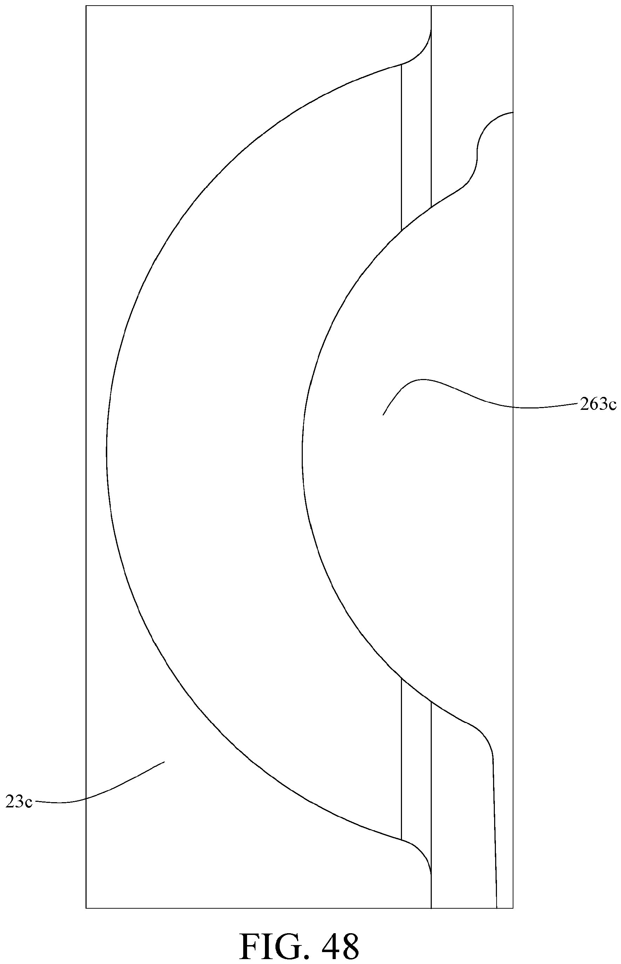

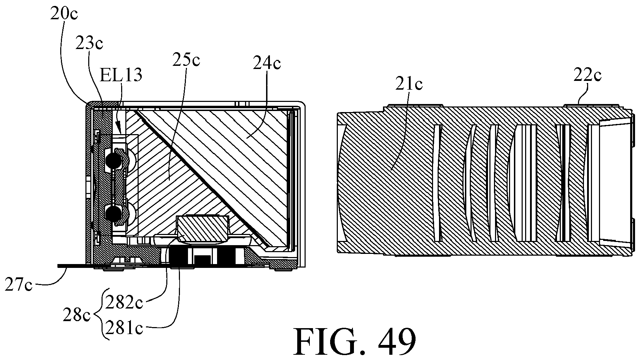

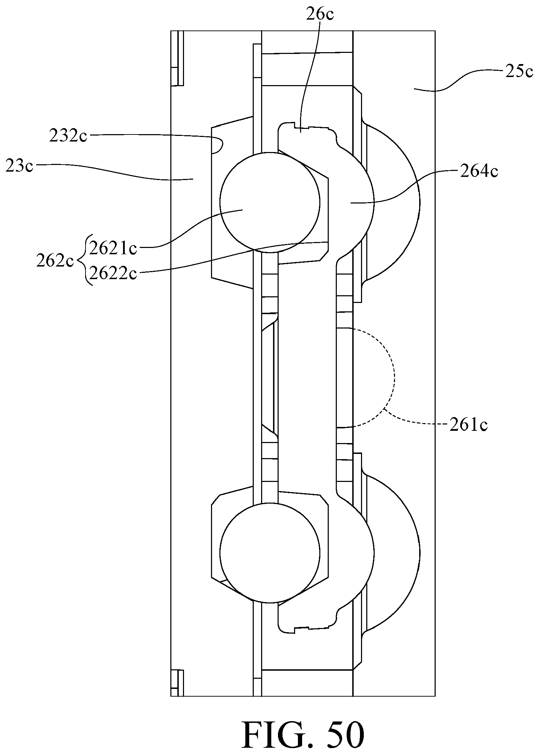

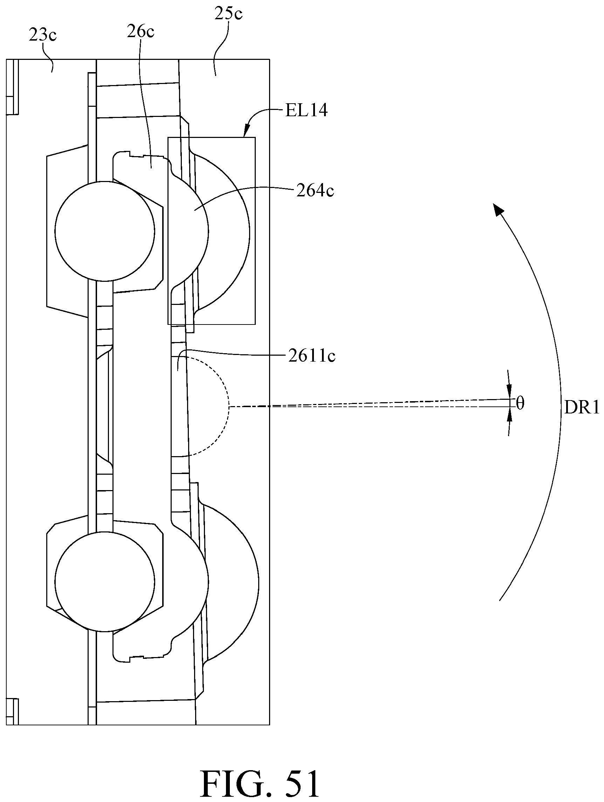

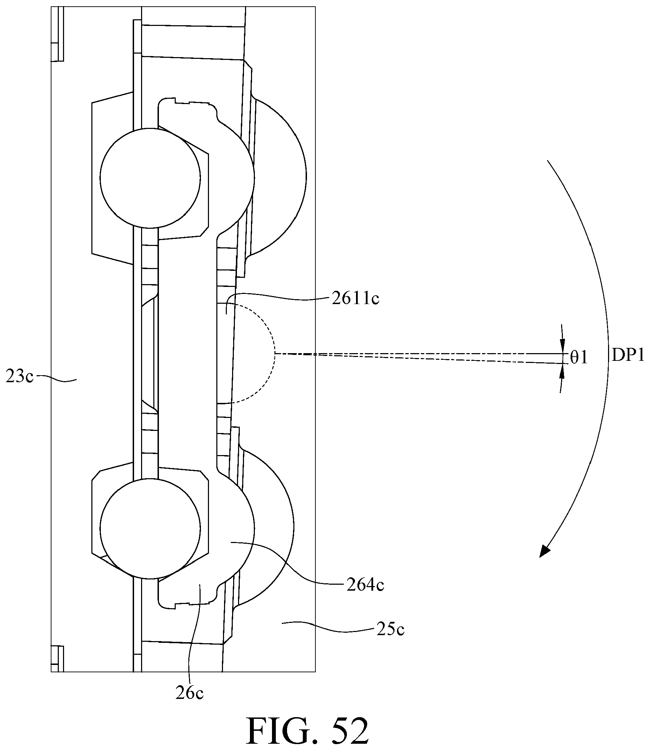

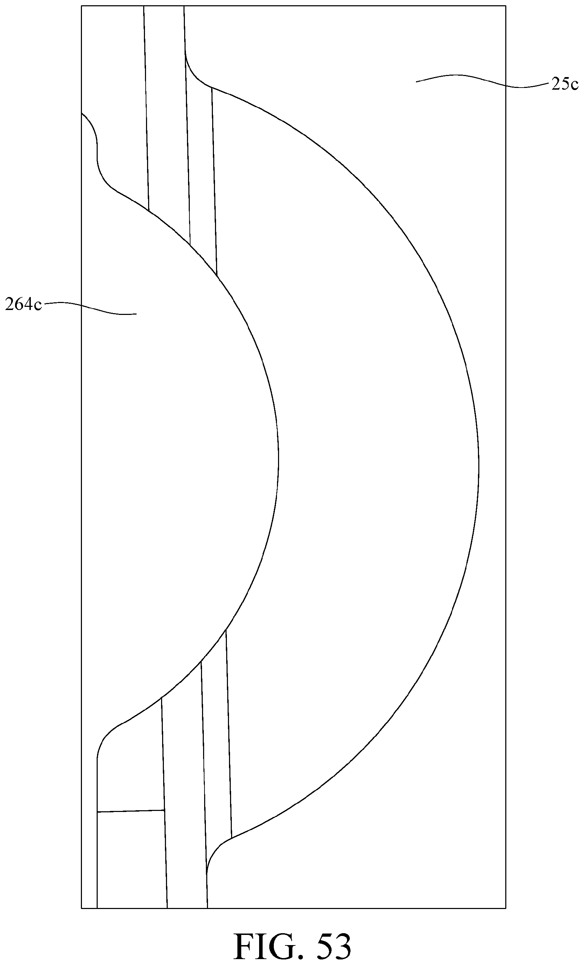

Fig. 36 is a perspective view of a camera module according to the 3rd embodiment of the present disclosure, Fig. 37 is an exploded view of the camera module in Fig. 36, Fig. 38 is another exploded view of the camera module in Fig. 36, Fig. 39 is a top view of the camera module in Fig. 36, Fig. 40 is a side view of the camera module in Fig. 36, Fig. 41 is an enlarged view of a plastic swing element in Fig. 37, Fig. 42 is an enlarged view of the plastic swing element in Fig. 38, Fig. 43 is an enlarged view of region EL10 in Fig. 42, Fig. 44 is a sectional view of the camera module along line 44-44 in Fig. 40, Fig. 45 is an enlarged view of region EL11 in Fig. 44, Fig. 46 is a schematic view of a movable carrier in Fig. 45 rotated in a first rotation direction, Fig. 47 is a schematic view of the movable carrier in Fig. 45 rotated in a direction opposite to the first rotation direction, Fig. 48 is an enlarged view of region EL12 in Fig. 46, Fig. 49 is a sectional view of the camera module along line 49-49 in Fig. 39, Fig. 50 is an enlarged view of region EL13 in Fig. 49, Fig. 51 is schematic view of the movable carrier and the plastic swing element in Fig. 50 rotated in a second rotation direction, Fig. 52 is schematic view of the movable carrier and the plastic swing element in Fig. 50 rotated in a direction opposite to the second rotation direction, and Fig. 53 is an enlarged view of region EL14 in Fig. 51.

In this embodiment, a camera module 1c is provided. The camera module 1c includes an image stabilization lens module 2c and an image sensor ISU. In addition, the image stabilization lens module 2c includes an optical lens assembly 21c, a lens holder 22c, a casing 20c, a fixed base 23c, a light-folding element 24c, a movable carrier 25c, a plastic swing element 26c, a flexible printed circuit board 27c and a driving mechanism 28c. The image sensor ISU is disposed on an image surface of the optical lens assembly 21c.

The optical lens assembly 21c includes a plurality of optical lens elements, and an optical axis passes through the optical lens elements. Furthermore, the lens holder 22c holds the optical lens elements of the optical lens assembly 21c.

The light-folding element 24c is located on an object side of the lens holder 22c, and the light-folding element 24c is configured to fold the optical axis. Furthermore, the light-folding element 24c is configured to redirect an incident light traveling along the optical axis towards the lens holder 22c, so that the light passes through the optical lens elements of the optical lens assembly 21c. In this embodiment, the light-folding element 24c is a prism.

The casing 20c is disposed on the fixed base 23c, and the casing 20c and the fixed base 23c together form an accommodation space S. The movable carrier 25c is rotatably disposed in the accommodation space S and carries the light-folding element 24c, and the movable carrier 25c is configured to bring the light-folding element 24c to rotate together.

The fixed base 23c is connected to the movable carrier 25c via an elastic element EC, and the elastic element EC exerts a preload force on the movable carrier 25c in a direction towards the fixed base 23c.

The plastic swing element 26c is disposed between the movable carrier 25c and the fixed base 23c, and the plastic swing element 26c is in physical contact with the movable carrier 25c and the fixed base 23c. In specific, as shown in Fig. 37, Fig. 38, Fig. 41 and Fig. 42, the plastic swing element 26c includes a main body 260c, a carrier support structure 261c, a base support structure 262c, a carrier auxiliary structure 263c and a base auxiliary structure 264c. The main body 260c has a carrier corresponsive surface CS facing the movable carrier 25c and a base corresponsive surface BS facing the fixed base 23c.

The carrier support structure 261c is disposed on the carrier corresponsive surface CS, the carrier support structure 261c supports and is connected to the movable carrier 25c, and the carrier support structure 261c is in physical contact with the movable carrier 25c. In detail, as shown in Fig. 38 and Fig. 42, the carrier support structure 261c consists of two balls 2611c and two conical recesses 2612c, the conical recesses 2612c are formed on the carrier corresponsive surface CS, and the balls 2611c are respectively in physical contact with the conical recesses 2612c. Moreover, each of the conical recesses 2612c consists of multiple flat surfaces that are tangent to the surface of the balls 2611c, thus having a conical appearance. In addition, as shown in Fig. 37 and Fig. 45, the movable carrier 25c has two conical recesses 252c corresponding to the carrier support structure 261c, and the balls 2611c of the carrier support structure 261c are respectively and rotatably disposed in the conical recesses 252c of the movable carrier 25c. Moreover, the balls 2611c of the carrier support structure 261c support and are in physical contact with the conical recesses 252c of the movable carrier 25c. Furthermore, as shown in Fig. 42, Fig. 51 and Fig. 52, the carrier support structure 261c has a first rotation axis RA1, and the movable carrier 25c is rotatable relative to the fixed base 23c around the first rotation axis RA1 in a first rotation direction DR1 or a direction DP1 opposite to the first rotation direction DR1 (e.g., a yaw direction of the movable carrier 25c). In this embodiment, the first rotation axis RA1 is located in a connection line of contact points between the conical recesses 252c of the movable carrier 25c and the balls 2611c of the carrier support structure 261c.

The base support structure 262c is disposed on the base corresponsive surface BS, and the base support structure 262c is connected to the fixed base 23c, so that the fixed base 23c supports the plastic swing element 26c. Moreover, the base support structure 262c is in physical contact with the fixed base 23c. In detail, as shown in Fig. 37 and Fig. 41, the base support structure 262c consists of two balls 2621c and two conical recesses 2622c, the conical recesses 2622c are formed on the base corresponsive surface BS, and the balls 2621c are respectively in physical contact with the conical recesses 2622c. Moreover, each of the conical recesses 2622c can consist of multiple flat surfaces that are tangent to the surface of the balls 2621c, thus having a conical appearance, but the present disclosure is not limited thereto. In addition, as shown in Fig. 38 and Fig. 50, the fixed base 23c has two conical recesses 232c corresponding to the base support structure 262c, and the balls 2621c of the base support structure 262c are respectively and rotatably disposed in the conical recesses 232c of the fixed base 23c. Moreover, the conical recesses 232c of the fixed base 23c support and are in physical contact with the balls 2621c of the base support structure 262c. Furthermore, as shown in Fig. 41, Fig. 46 and Fig. 47, the base support structure 262c has a second rotation axis RA2, and the movable carrier 25c, via the plastic swing element 26c, is rotatable relative to the fixed base 23c around the second rotation axis RA2 in a second rotation direction DR2 or a direction DP2 opposite to the second rotation direction DR2 (e.g., a pitch direction of the movable carrier 25c). In this embodiment, the second rotation axis RA2 is located in a connection line of contact points between the conical recesses 232c of the fixed base 23c and the balls 2621c of the base support structure 262c. In addition, the first rotation axis RA1 is orthogonal to the second rotation axis RA2.

The carrier auxiliary structure 263c is disposed on the base corresponsive surface BS, and the carrier auxiliary structure 263c is disposed opposite to the carrier support structure 261c. In addition, as shown in Fig. 44 and Fig. 45, the carrier auxiliary structure 263c overlaps the carrier support structure 261c in a direction parallel to a part of the optical axis on the image side of the light-folding element 24c, wherein the part of the optical axis on the image side of the light-folding element 24c can be defined as in a region where the optical axis, which has been folded by the light-folding element 24c, extends. In this embodiment, a first block mechanism is formed between the carrier auxiliary structure 263c and the fixed base 23c. In detail, as shown in Fig. 46 to Fig. 48, after the plastic swing element 26c is driven (e.g., brought by the movable carrier 25c) to rotate a certain angle θ2 in the second rotation direction DR2 or the opposite direction DP2, the carrier auxiliary structure 263c on the base corresponsive surface BS comes into contact with the fixed base 23c, such that the fixed base 23c blocks the carrier auxiliary structure 263c so as to stop the rotation of the plastic swing element 26c.

The base auxiliary structure 264c is disposed on the carrier corresponsive surface CS, and the base auxiliary structure 264c is disposed opposite to the base support structure 262c. In addition, as shown in Fig. 49 and Fig. 50, the base auxiliary structure 264c overlaps the base support structure 262c in the direction parallel to the part of the optical axis on the image side of the light-folding element 24c. In this embodiment, a second block mechanism is formed between the base auxiliary structure 264c and the movable carrier 25c. In detail, as shown in Fig. 51 to Fig. 53, after the movable carrier 25c is driven to rotate a certain angle θ1 in the first rotation direction DR1 or the opposite direction DP1, the movable carrier 25c on the carrier corresponsive surface CS comes into contact with the base auxiliary structure 264c, such that the base auxiliary structure 264c blocks the movable carrier 25c so as to stop the rotation of the movable carrier 25c.

In this embodiment, the carrier auxiliary structure 263c, the base auxiliary structure 264c and the main body 260c of the plastic swing element 26c are formed in one piece. As shown in Fig. 42 and Fig. 43, the main body 260c of the plastic swing element 26c has at least one gate trace GT.

The flexible printed circuit board 27c is attached to the fixed base 23c.

The driving mechanism 28c is configured to drive the movable carrier 25c to rotate relative to the fixed base 23c in the first rotation direction DR1 (and the opposite direction DP1) and/or the second rotation direction DR2 (and the opposite direction DP2), so that the light-folding element 24c disposed on the movable carrier 25c can be rotated together relative to the fixed base 23c. In specific, as shown in Fig. 37 and Fig. 38, the driving mechanism 28c includes three coils 281c and three magnets 282c disposed corresponding to each other. The magnets 282c are disposed on the movable carrier 25c, and the coils 281c are disposed on the flexible printed circuit board 27c and therefore, are indirectly disposed on the fixed base 23c. The flexible printed circuit board 27c is configured to provide a driving current to the coils 281c, so that an interaction between the coils 281c and the magnets 282c can drive the movable carrier 25c to rotate around the first rotation axis RA1 in the first rotation direction DR1 or the opposite direction DP1 (as shown in Fig. 42, Fig. 51 and Fig. 52), and also can drive the movable carrier 25c to rotate around the second rotation axis RA2 in the second rotation direction DR2 or the opposite direction DP2 (as shown in Fig. 41, Fig. 46 and Fig. 47).

When a maximum field of view of the optical lens assembly 21c is FOV, the following condition is satisfied: 1 degree < FOV < 50 degrees.

### 4th Embodiment

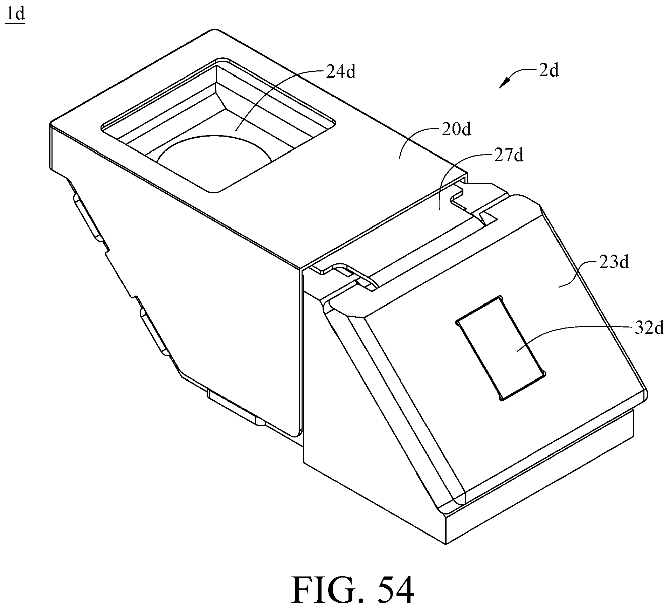

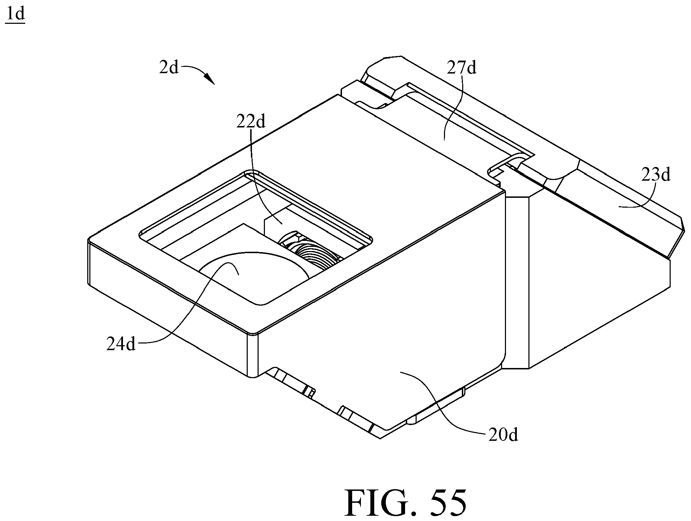

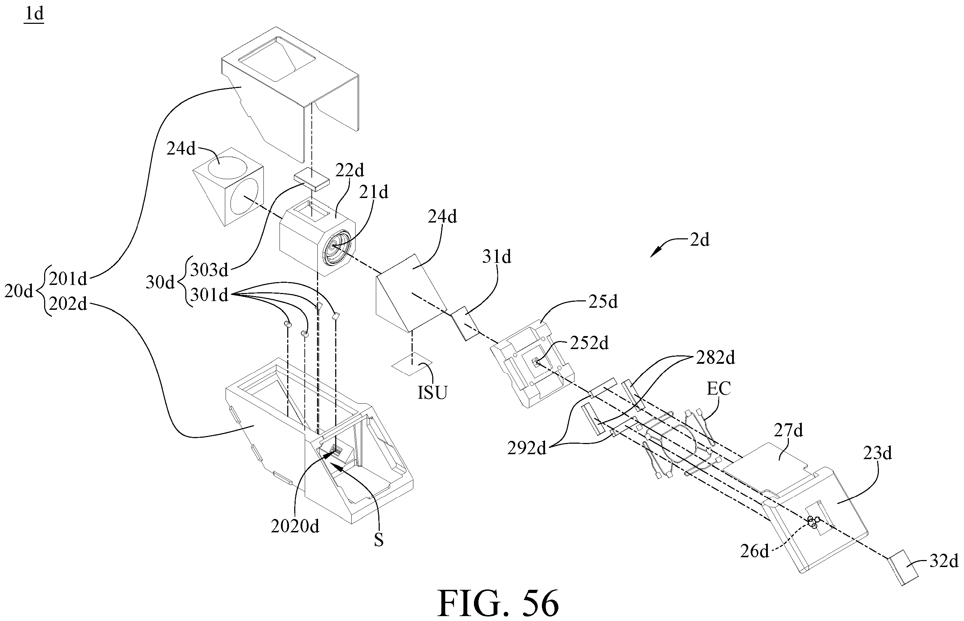

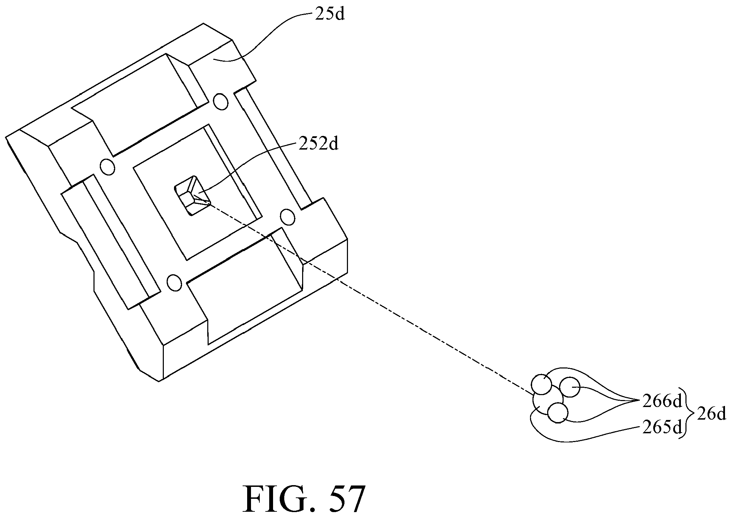

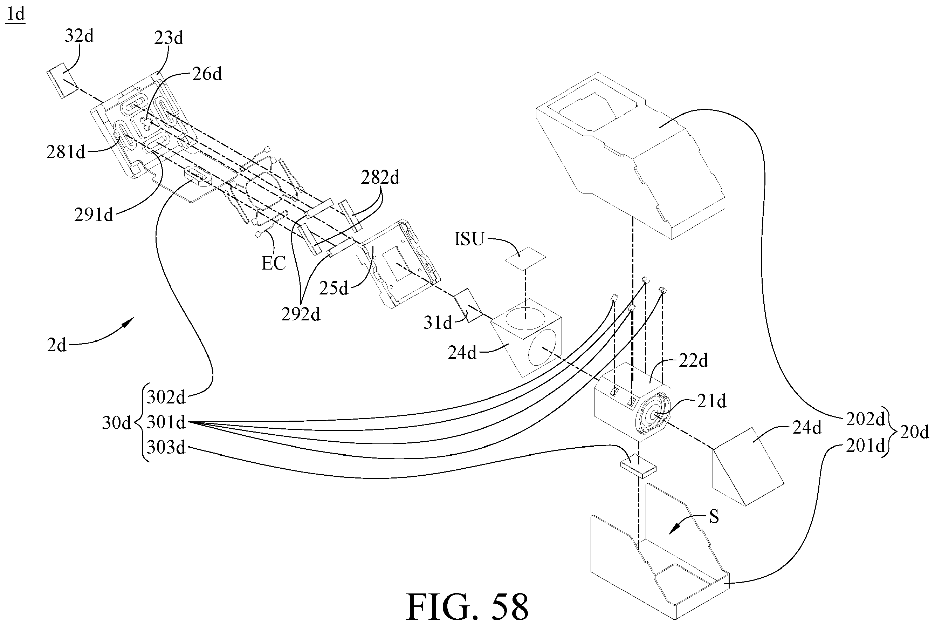

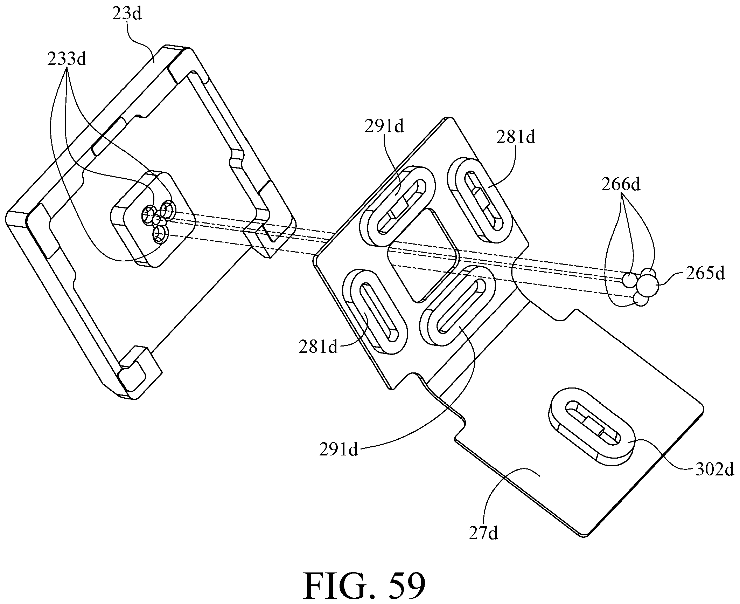

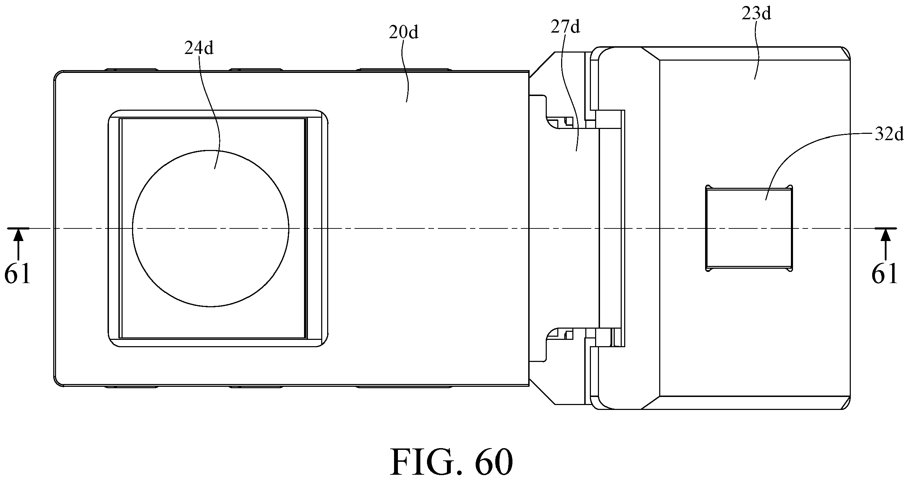

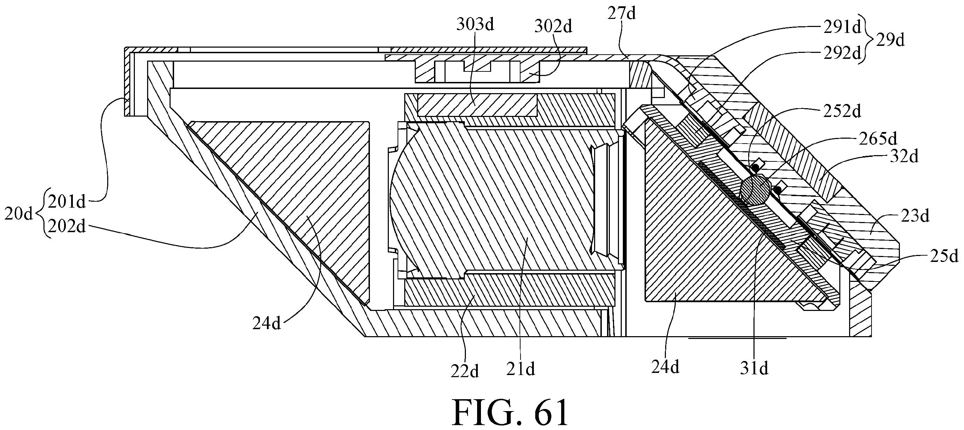

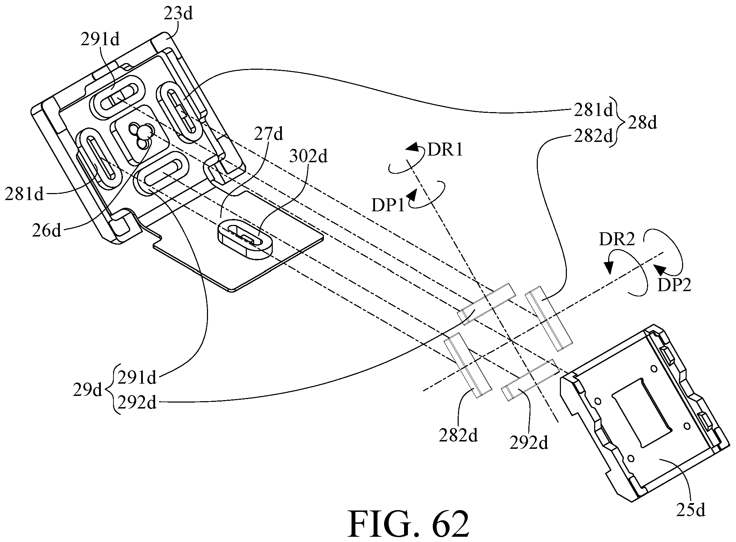

Fig. 54 is a perspective view of a camera module according to the 4th embodiment of the present disclosure, Fig. 55 is another perspective view of the camera module in Fig. 54, Fig. 56 is an exploded view of the camera module in Fig. 54, Fig. 57 is an exploded view of a movable carrier and a swing element in Fig. 56, Fig. 58 is another exploded view of the camera module in Fig. 54, Fig. 59 is a partially exploded view of a fixed base, a flexible printed circuit board, coils and the swing element in Fig. 58, Fig. 60 is a top view of the camera module in Fig. 54, Fig. 61 is a sectional view of the camera module along line 61-61 in Fig. 60, and Fig. 62 is a partially exploded view of the fixed base, the flexible printed circuit board, driving mechanisms, the swing element and the movable carrier in Fig. 58.

In this embodiment, a camera module 1d is provided. The camera module 1d includes an image stabilization lens module 2d and an image sensor ISU. In addition, the image stabilization lens module 2d includes a casing 20d, a fixed base 23d, an optical lens assembly 21d, a lens holder 22d, two light-folding elements 24d, a movable carrier 25d, a swing element 26d, a flexible printed circuit board 27d, a first driving mechanism 28d, a second driving mechanism 29d, a third driving mechanism 30d, a guiding yoke 31d and a guiding magnet 32d. The image sensor ISU is disposed on an image surface of the optical lens assembly 21d.

The casing 20d includes a cover 201d and a frame body 202d, and the cover 201d is assembled to the frame body 202d. The fixed base 23d is disposed on the frame body 202d of the casing 20d, and the fixed base 23d and the casing 20d together form an accommodation space S for the optical lens assembly 21d, the lens holder 22d, the light-folding elements 24d, the movable carrier 25d, the swing element 26d, the flexible printed circuit board 27d, the first driving mechanism 28d, the second driving mechanism 29d, the third driving mechanism 30d and the guiding yoke 31d to be disposed therein.

The optical lens assembly 21d includes a plurality of optical lens elements, and an optical axis passes through the optical lens elements. Furthermore, the lens holder 22d holds the optical lens elements of the optical lens assembly 21d.

The light-folding elements 24d are respectively located on an object side and an image side of the lens holder 22d, and the light-folding elements 24d are configured to fold the optical axis, so that light changes its traveling direction multiple times in the image stabilization lens module 2d. Furthermore, the light-folding element 24d located on the object side of the lens holder 22d is configured to redirect an incident light traveling along the optical axis towards the lens holder 22d so that the light passes through the optical lens elements of the optical lens assembly 21d, and the light-folding element 24d located on the image side of the lens holder 22d is configured to redirect the light coming from the optical lens assembly 21d. In this embodiment, the two light-folding elements 24d are prisms, and by selecting prism(s) with a certain reflective index, the light can undergo total internal reflection(s) in at least one of the light-folding elements 24d.

The movable carrier 25d is rotatably disposed in the accommodation space S and carries the light-folding element 24d located on the image side of the lens holder 22d, and the movable carrier 25d is configured to bring the light-folding element 24d located on the image side of the lens holder 22d to rotate together. In this embodiment, the light-folding element 24d located on the object side of the lens holder 22d is fixed to the frame body 202d of the casing 20d.

The fixed base 23d is connected to the movable carrier 25d via an elastic element EC, and the elastic element EC exerts a preload force on the movable carrier 25d in a direction towards the fixed base 23d.

The swing element 26d is disposed between the movable carrier 25d and the fixed base 23d, and the swing element 26d is in physical contact with the movable carrier 25d and the fixed base 23d. In specific, as shown in Fig. 56 to Fig. 59, the swing element 26d includes a main support ball 265d and three auxiliary balls 266d, and the main support ball 265d has one contact point with each of the auxiliary balls 266d.

The main support ball 265d supports and is connected to the movable carrier 25d, and the main support ball 265d is in physical contact with the movable carrier 25d. In detail, as shown in Fig. 57 and Fig. 61, the movable carrier 25d has a conical recess 252d corresponding to the main support ball 265d, the main support ball 265d is rotatably disposed in the conical recess 252d of the movable carrier 25d, and the main support ball 265d supports and is in physical contact with the conical recess 252d of the movable carrier 25d.

The auxiliary balls 266d are connected to the fixed base 23d, so that the fixed base 23d supports the swing element 26d, and the auxiliary balls 266d are in physical contact with the fixed base 23d. In detail, as shown in Fig. 58 and Fig. 59, the fixed base 23d has three recesses 233d corresponding to the auxiliary balls 266d, and the auxiliary balls 266d are respectively and rotatably disposed in the recesses 233d of the fixed base 23d. Moreover, the recesses 233d of the fixed base 23d support and are in physical contact with the auxiliary balls 266d.

The flexible printed circuit board 27d is attached to the fixed base 23d.

The first driving mechanism 28d is configured to drive the movable carrier 25d to rotate relative to the fixed base 23d in a first rotation direction DR1 or a direction DP1 opposite to the first rotation direction DR1 (e.g., a yaw direction of the movable carrier 25d), so that the light-folding element 24d disposed on the movable carrier 25d can be rotated together relative to the fixed base 23d in the first rotation direction DR1 or the opposite direction DP1. In specific, as shown in Fig. 62, the first driving mechanism 28d includes two first coils 281d and two first magnets 282d disposed corresponding to each other, the first magnets 282d are disposed on the movable carrier 25d, and the first coils 281d are disposed on the flexible printed circuit board 27d and therefore, are indirectly disposed on the fixed base 23d. The flexible printed circuit board 27d is configured to provide a driving current to the first coils 281d, so that an interaction between the first coils 281d and the first magnets 282d can drive the movable carrier 25d to rotate by taking the main support ball 265d as a rotation center in the first rotation direction DR1 or the opposite direction DP1.

The second driving mechanism 29d is configured to drive the movable carrier 25d to rotate relative to the fixed base 23d in a second rotation direction DR2 or a direction DP2 opposite to the second rotation direction DR2 (e.g., a pitch direction of the movable carrier 25d), so that the light-folding element 24d disposed on the movable carrier 25d can be rotated together relative to the fixed base 23d in the second rotation direction DR2 or the opposite direction DP2. In specific, as shown in Fig. 62, the second driving mechanism 29d includes two second coils 291d and two second magnets 292d disposed corresponding to each other, the second magnets 292d are disposed on the movable carrier 25d, and the second coils 291d are disposed on the flexible printed circuit board 27d and therefore, are indirectly disposed on the fixed base 23d. The flexible printed circuit board 27d is configured to provide a driving current to the second coils 291d, so that an interaction between the second coils 291d and the second magnets 292d can drive the movable carrier 25d to rotate by taking the main support ball 265d as a rotation center in the second rotation direction DR2 or the opposite direction DP2.

In this embodiment, the rotation axis of the first rotation direction DR1 is orthogonal to the rotation axis of the second rotation direction DR2.

The third driving mechanism 30d includes a plurality of rollable elements 301d, a third coil 302d and a third magnet 303d. The rollable elements 301d are respectively and rollably disposed in guiding grooves 2020d of the frame body 202d and clamped between the lens holder 22d and the frame body 202d. The third coil 302d is disposed on the flexible printed circuit board 27d, and the third magnet 303d is fixed to the lens holder 22d. Moreover, the flexible printed circuit board 27d is configured to provide a driving current to the third coil 302d. The third coil 302d and the third magnet 303d face each other so as to provide a driving force to move the lens holder 22d, and the lens holder 22d is movable in the direction parallel to the optical axis (i.e., the part of the optical axis between the two light-folding elements 24d) with the collaboration of the rollable elements 301d, thereby providing auto focusing function.

The guiding yoke 31d is disposed on the movable carrier 25d, and the guiding magnet 32d is disposed on the fixed base 23d. The guiding yoke 31d and the guiding magnet 32d are disposed corresponding to each other and together generate a preload force. In this embodiment, an interaction between the guiding yoke 31d and the guiding magnet 32d exerts a preload force on the movable carrier 25d in a direction towards the fixed base 23d.

When a maximum field of view of the optical lens assembly 21d is FOV, the following condition is satisfied: 1 degree < FOV < 50 degrees.

### 5th Embodiment

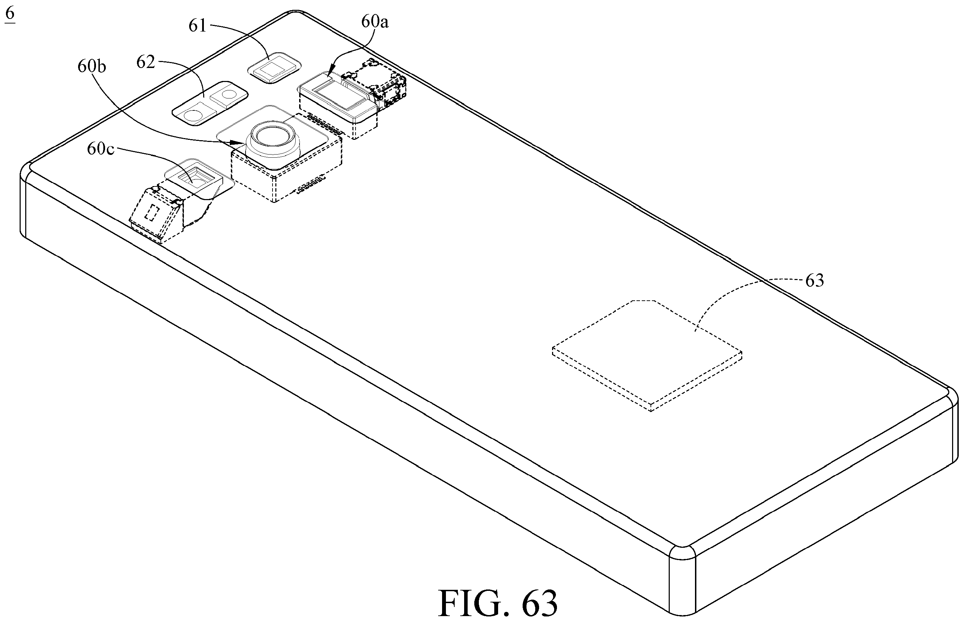

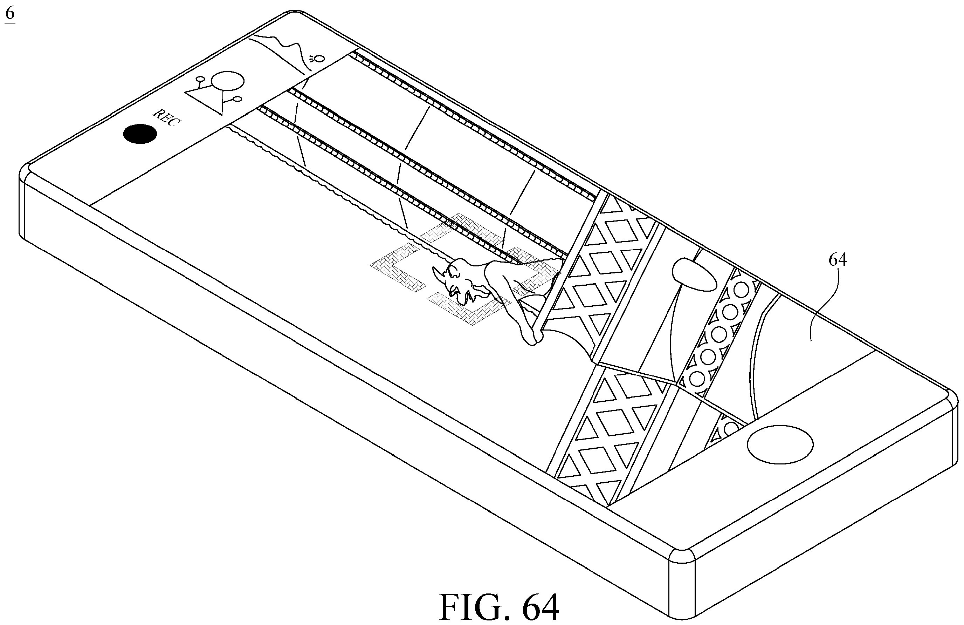

Please refer to Fig. 63 and Fig. 64. Fig. 63 is one perspective view of an electronic device according to the 5th embodiment of the present disclosure, and Fig. 64 is another perspective view of the electronic device in Fig. 63.

In this embodiment, the electronic device 6 is a smartphone including a plurality of camera modules, a flash module 61, a focus assist module 62, an image signal processor 63, a display module (user interface) 64 and an image software processor (not shown).

The camera modules include an ultra-wide-angle camera module 60a, a high pixel camera module 60b and a telephoto camera module 60c. Moreover, at least one of the camera modules 60a, 60b and 60c includes the image stabilization lens module of the present disclosure.

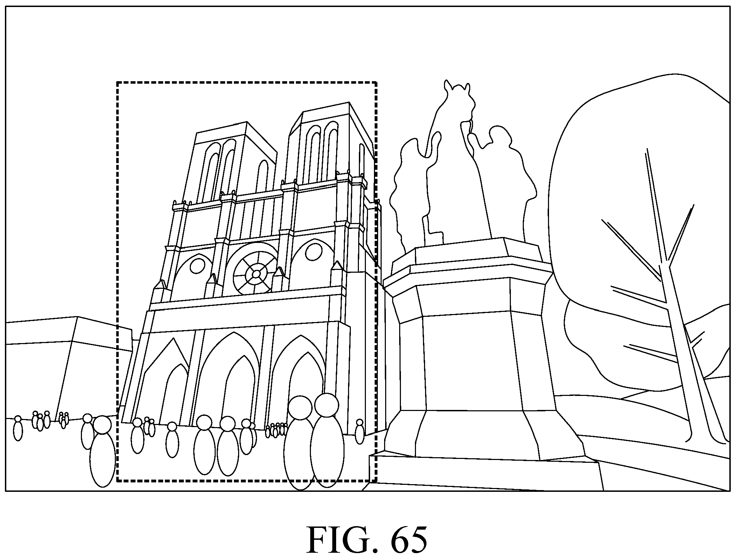

The image captured by the ultra-wide-angle camera module 60a enjoys a feature of multiple imaged objects. Fig. 65 is an image captured by the ultra-wide-angle camera module 60a.

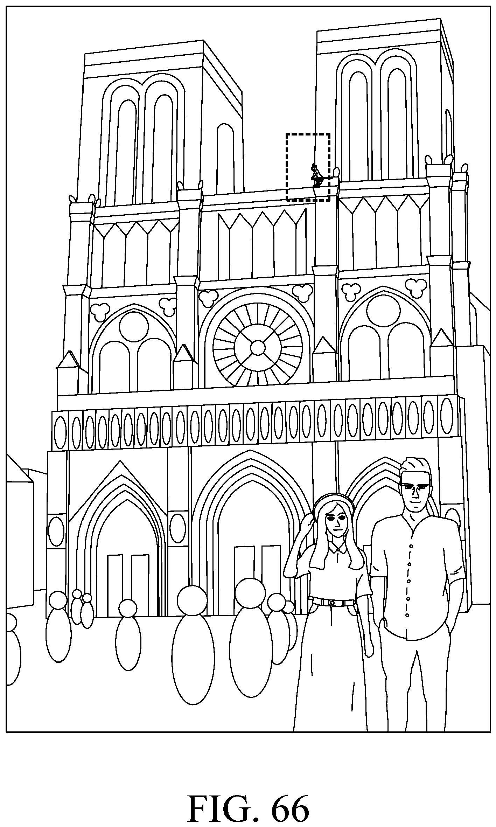

The image captured by the high pixel camera module 60b enjoys a feature of high resolution and less distortion, and the high pixel camera module 60b can capture part of the image in Fig. 65. Fig. 66 is an image captured by the high pixel camera module 60b.

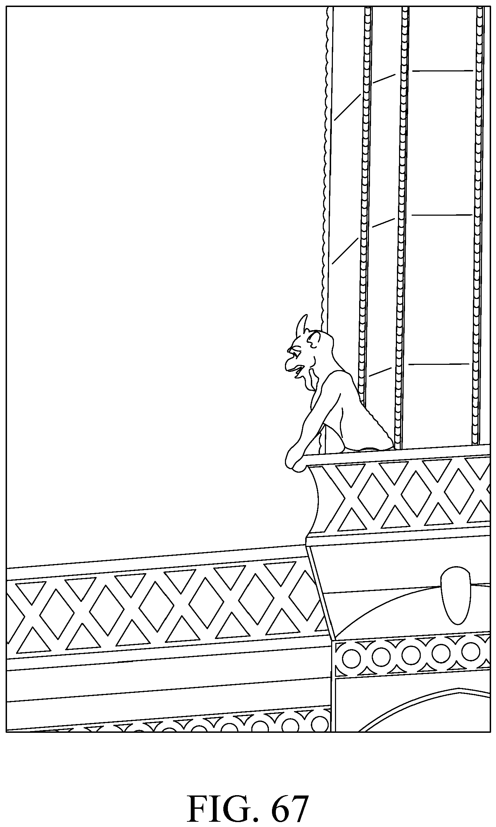

The image captured by the telephoto camera module 60c enjoys a feature of high optical magnification, and the telephoto camera module 60c can capture part of the image in Fig. 66. Fig. 67 is an image captured by the telephoto camera module 60c. The maximum field of view of the camera module corresponds to the field of view in Fig. 67.

When a user captures images of an object, the light rays converge in the ultra-wide-angle camera module 60a, the high pixel camera module 60b or the telephoto camera module 60c to generate images, and the flash module 61 is activated for light supplement. The focus assist module 62 detects the object distance of the imaged object to achieve fast auto focusing. The image signal processor 63 is configured to optimize the captured image to improve image quality and provided zooming function. The light beam emitted from the focus assist module 62 can be either conventional infrared or laser. The display module 64 can include a touch screen, and the user is able to interact with the display module 64 to adjust the angle of view and switch between different camera modules, and the image software processor having multiple functions to capture images and complete image processing. Alternatively, the user may capture images via a physical button. The image processed by the image software processor can be displayed on the display module 64.

### 6th Embodiment

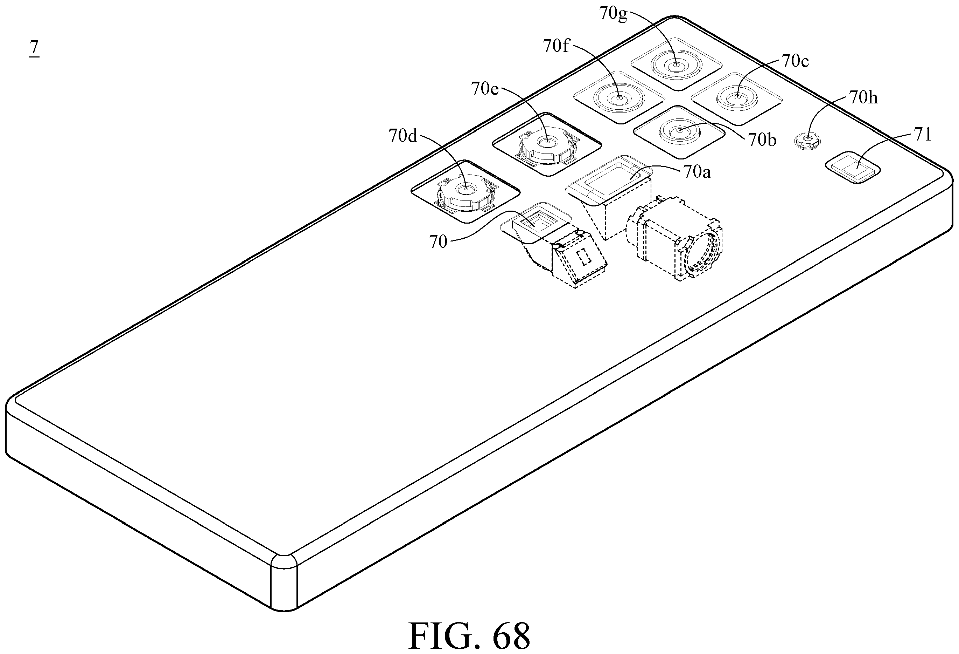

Please refer to Fig. 68, which is one perspective view of an electronic device according to the 6th embodiment of the present disclosure.

In this embodiment, the electronic device 7 is a smartphone including a camera module 70, a camera module 70a, a camera module 70b, a camera module 70c, a camera module 70d, a camera module 70e, a camera module 70f, a camera module 70g, a camera module 70h, a flash module 71, an image signal processor, a display module and an image software processor (not shown). The camera module 70 includes the image stabilization lens module 2d as disclosed in the 4th embodiment of the present disclosure. The camera module 70, the camera module 70a, the camera module 70b, the camera module 70c, the camera module 70d, the camera module 70e, the camera module 70f, the camera module 70g and the camera module 70h are disposed on the same side of the electronic device 7, while the display module is disposed on the opposite side of the electronic device 7.

The camera module 70 is a telephoto camera module, the camera module 70a is a telephoto camera module, the camera module 70b is a telephoto camera module, the camera module 70c is a telephoto camera module, the camera module 70d is a wide-angle camera module, the camera module 70e is a wide-angle camera module, the camera module 70f is an ultra-wide-angle camera module, the camera module 70g is an ultra-wide-angle camera module, and the camera module 70h is a ToF (time of flight) camera module. In this embodiment, the camera module 70, the camera module 70a, the camera module 70b, the camera module 70c, the camera module 70d, the camera module 70e, the camera module 70f and the camera module 70g have different fields of view, such that the electronic device 7 can have various magnification ratios so as to meet the requirement of optical zoom functionality. In addition, the camera module 70 and the camera module 70a are telephoto camera modules having a light-folding element configuration. In addition, the camera module 70h can determine depth information of the imaged object. In this embodiment, the electronic device 7 includes multiple camera modules 70, 70a, 70b, 70c, 70d, 70e, 70f, 70g, and 70h, but the present disclosure is not limited to the number and arrangement of camera module. When a user captures images of an object, the light rays converge in the camera module 70, 70a, 70b, 70c, 70d, 70e, 70f, 70g or 70h to generate an image(s), and the flash module 71 is activated for light supplement. Further, the subsequent processes are performed in a manner similar to the abovementioned embodiments, so the details in this regard will not be provided again.

### 7th Embodiment

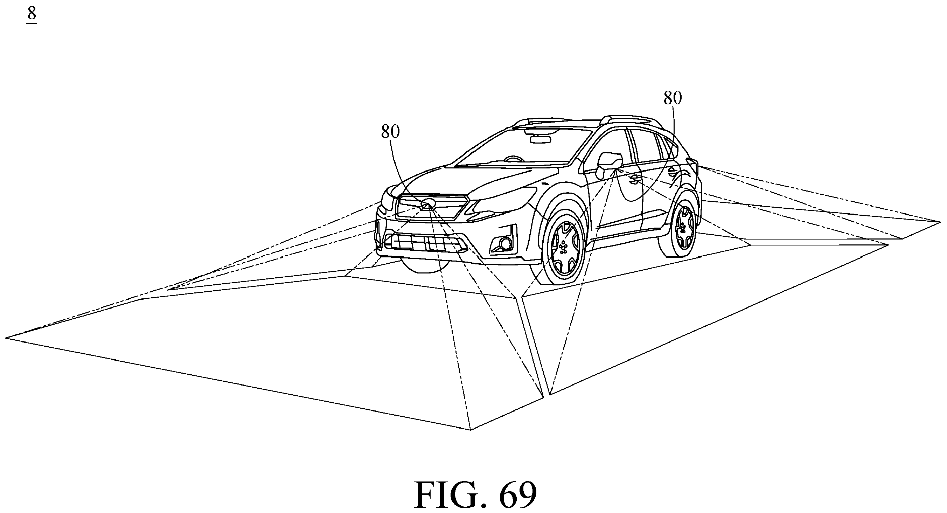

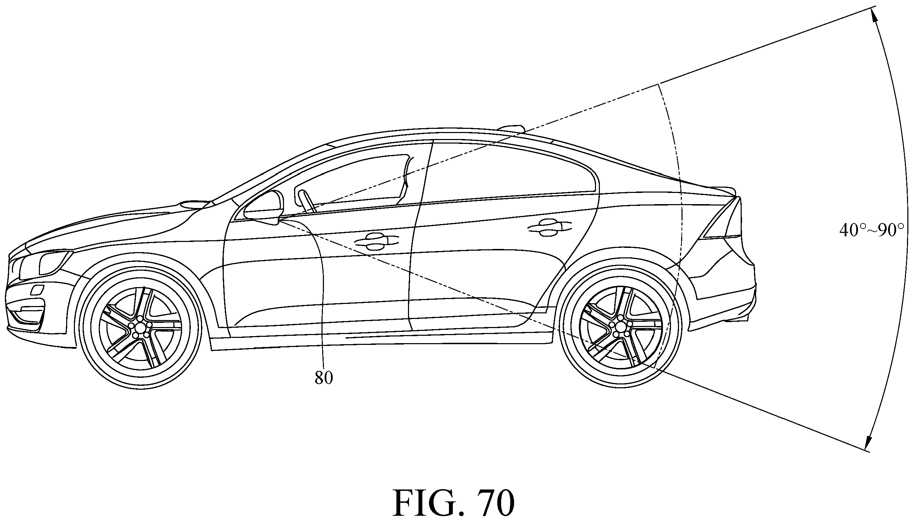

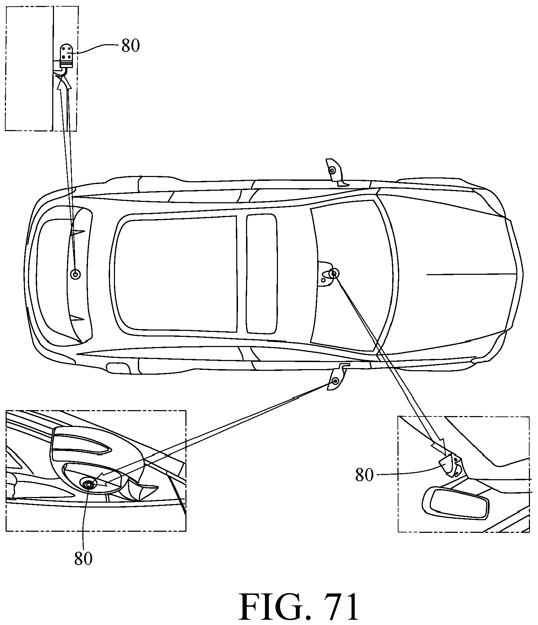

Please refer to Fig. 69 to Fig. 71. Fig. 69 is a perspective view of an electronic device according to the 7th embodiment of the present disclosure, Fig. 70 is a side view of the electronic device in Fig. 69, and Fig. 71 is a top view of the electronic device in Fig. 69.

In this embodiment, the electronic device 8 is an automobile. The electronic device 8 includes a plurality of automotive camera modules 80, and the camera modules 80, for example, each includes the camera module of the present disclosure. The camera modules 80 can be served as, for example, panoramic view car cameras, dashboard cameras and vehicle backup cameras.

As shown in Fig. 69, the camera modules 80 are, for example, disposed around the automobile to capture peripheral images of the automobile, which is favorable for obtaining external traffic information so as to achieve autopilot function. In addition, the image software processor may blend the peripheral images into one panoramic view image for the driver's checking every corner surrounding the automobile, thereby favorable for parking and driving.

As shown in Fig. 70, the camera modules 80 are, for example, respectively disposed on the lower portion of the side mirrors. A maximum field of view of the camera modules 80 can be 40 degrees to 90 degrees for capturing images in regions on left and right lanes.

As shown in Fig. 71, the camera modules 80 can also be, for example, respectively disposed on the lower portion of the side mirrors and inside the front and rear windshields for providing external information to the driver, and also providing more viewing angles so as to reduce blind spots, thereby improving driving safety.

The smartphones, panoramic view car cameras, dashboard cameras and vehicle backup cameras in the embodiments are only exemplary for showing the image stabilization lens module and the camera module of the present disclosure installed in an electronic device, and the present disclosure is not limited thereto. The image stabilization lens module and the camera module can be optionally applied to optical systems with a movable focus. Furthermore, the image stabilization lens module and the camera module feature good capability in aberration corrections and high image quality, and can be applied to 3D (three-dimensional) image capturing applications, in products such as digital cameras, mobile devices, digital tablets, smart televisions, network surveillance devices, multi-camera devices, image recognition systems, motion sensing input devices, wearable devices and other electronic imaging devices.

The foregoing description, for the purpose of explanation, has been described with reference to specific embodiments. It is to be noted that the present disclosure shows different data of the different embodiments; however, the data of the different embodiments are obtained from experiments. The embodiments were chosen and described in order to best explain the principles of the disclosure and its practical applications, to thereby enable others skilled in the art to best utilize the disclosure and various embodiments with various modifications as are suited to the particular use contemplated. The embodiments depicted above and the appended drawings are exemplary and are not intended to be exhaustive or to limit the scope of the present disclosure to the precise forms disclosed. Many modifications and variations are possible in view of the above teachings.

## Claims

1. An image stabilization lens module (2) comprising:
an optical lens assembly (21) comprising a plurality of optical lens elements, and an optical axis passing through the plurality of optical lens elements;
a lens holder (22) holding the plurality of optical lens elements of the optical lens assembly (21);
a light-folding element (24) located on the optical axis and folding the optical axis;
a movable carrier (25) carrying the light-folding element (24);
a fixed base (23) connected to the movable carrier (25) via an elastic element (EC);
a plastic swing element (26) disposed between the movable carrier (25) and the fixed base (23), and the plastic swing element (26) comprising:
a main body (260) having a carrier corresponsive surface (CS) facing the movable carrier (25) and a base corresponsive surface (BS) facing the fixed base (23);
a carrier support structure (261) disposed on the carrier corresponsive surface (CS), and the carrier support structure (261) supporting and being connected to the movable carrier (25);
a base support structure (262) disposed on the base corresponsive surface (BS), and the base support structure (262) connected to the fixed base (23), so that the fixed base (23) supports the plastic swing element (26);
a carrier auxiliary structure (263) disposed on the base corresponsive surface (BS), and the carrier auxiliary structure (263) disposed opposite to the carrier support structure (261); and
a base auxiliary structure (264) disposed on the carrier corresponsive surface (CS), and the base auxiliary structure (264) disposed opposite to the base support structure (262); and
a driving mechanism (28) configured to drive the movable carrier (25) to rotate relative to the fixed base (23);
wherein the light-folding element (24) is located on an object side of the lens holder (22);
wherein the carrier support structure (261) is in physical contact with the movable carrier (25), and the base support structure (262) is in physical contact with the fixed base (23);
wherein the carrier auxiliary structure (263), the base auxiliary structure (264) and the main body (260) of the plastic swing element (26) are formed in one piece.

2. The image stabilization lens module (2) of claim 1, wherein the carrier auxiliary structure (263) overlaps the carrier support structure (261) in a direction parallel to a part of the optical axis on an image side of the light-folding element (24).

3. The image stabilization lens module (2) of claim 2, wherein a first block mechanism is formed between the carrier auxiliary structure (263) and the fixed base (23).

4. The image stabilization lens module (2) of claim 3, wherein the base auxiliary structure (264) overlaps the base support structure (262) in the direction parallel to the part of the optical axis on the image side of the light-folding element (24).

5. The image stabilization lens module (2) of claim 4, wherein a second block mechanism is formed between the base auxiliary structure (264) and the movable carrier (25).

6. The image stabilization lens module (2c) of claim 5, wherein the carrier support structure (261c) consists of at least two balls (2611c) and at least two conical recesses (2612c), the at least two conical recesses (2612c) are formed on the carrier corresponsive surface (CS), and the at least two balls (2611c) are respectively in physical contact with the at least two conical recesses (2612c).

7. The image stabilization lens module (2c) of claim 6, wherein the base support structure (262c) consists of at least two balls (2621c) and at least two conical recesses (2622c), the at least two conical recesses (2622c) are formed on the base corresponsive surface (BS), and the at least two balls (2621c) are respectively in physical contact with the at least two conical recesses (2622c).

8. The image stabilization lens module (2) of claim 5, wherein the carrier support structure (261) consists of at least one cylindrical protrusion or at least one cylindrical recess.

9. The image stabilization lens module (2) of claim 8, wherein the base support structure (262) consists of at least one cylindrical protrusion or at least one cylindrical recess.

10. The image stabilization lens module (2) of claim 5, wherein the carrier support structure (261) has a first rotation axis (RA1).

11. The image stabilization lens module (2) of claim 10, wherein the base support structure (262) has a second rotation axis (RA2).

12. The image stabilization lens module (2) of claim 11, wherein the movable carrier (25) is rotatable relative to the fixed base (23) in a first rotation direction (DR1) around the first rotation axis (RA1) and rotatable relative to the fixed base (23) in a direction (DP1) opposite to the first rotation direction (DR1) around the first rotation axis (RA1).

13. The image stabilization lens module (2) of claim 12, wherein the movable carrier (25) is rotatable relative to the fixed base (23) in a second rotation direction (DR2) around the second rotation axis (RA2) and rotatable relative to the fixed base (23) in a direction (DP2) opposite to the second rotation direction (DR2) around the second rotation axis (RA2).

14. The image stabilization lens module (2) of claim 11, wherein the first rotation axis (RA1) is orthogonal to the second rotation axis (RA2).

15. The image stabilization lens module (2) of claim 1, wherein a maximum field of view of the optical lens assembly (21) is FOV, the following condition is satisfied:
1 degree < FOV < 50 degrees.

16. The image stabilization lens module (2) of claim 15, wherein the maximum field of view of the optical lens assembly (21) is FOV, the following condition is satisfied:
1 degree < FOV ≤ 35 degrees.

17. The image stabilization lens module (2) of claim 1, wherein the main body (260) of the plastic swing element (26) has at least one gate trace (GT).

18. The image stabilization lens module (2) of claim 1, wherein the driving mechanism (28) comprises at least one coil (281) and at least one magnet (282) disposed corresponding to each other, one of the at least one coil (281) and the at least one magnet (282) is disposed on the movable carrier (25), and another of the at least one coil (281) and the at least one magnet (282) is directly or indirectly disposed on the fixed base (23).

19. The image stabilization lens module (2) of claim 18, further comprising a flexible printed circuit board (27) attached to the fixed base (23).

20. The image stabilization lens module (2) of claim 19, wherein the at least one magnet (282) is disposed on the movable carrier (25), and the at least one coil (281) is disposed on the flexible printed circuit board (27).

21. A camera module (1, 60a, 60b, 60c) comprising:
the image stabilization lens module (2) of claim 1; and
an image sensor (ISU) disposed on an image surface of the optical lens assembly (21).

22. An electronic device (6) comprising:
the camera module (1, 60a, 60b, 60c) of claim 21.

23. An image stabilization lens module (2b) comprising:
an optical lens assembly (21b) comprising a plurality of optical lens elements, and an optical axis passing through the plurality of optical lens elements;
a lens holder (22b) holding the plurality of optical lens elements of the optical lens assembly (21b);
a light-folding element (24b) located on the optical axis and folding the optical axis;
a movable carrier (25b) carrying the light-folding element (24b);
a fixed base (23b) connected to the movable carrier (25b) via an elastic element (EC);
a swing element (26b) disposed between the movable carrier (25b) and the fixed base (23b), and the swing element (26b) comprising:
a main body (260b) having a carrier corresponsive surface (CS) facing the movable carrier (25b) and a base corresponsive surface (BS) facing the fixed base (23b);
a carrier support structure (261b) disposed on the carrier corresponsive surface (CS), and the carrier support structure (261b) supporting and being connected to the movable carrier (25b);
a base support structure (262b) disposed on the base corresponsive surface (BS), and the base support structure (262b) connected to the fixed base (23b), so that the fixed base (23b) supports the swing element (26b);
a carrier auxiliary structure (263b) disposed on the base corresponsive surface (BS), and the carrier auxiliary structure (263b) disposed opposite to the carrier support structure (261b); and
a base auxiliary structure (264b) disposed on the carrier corresponsive surface (CS), and the base auxiliary structure (264b) disposed opposite to the base support structure (262b); and
a driving mechanism (28b) configured to drive the movable carrier (25b) to rotate relative to the fixed base (23b);
wherein the light-folding element (24b) is located on an image side of the lens holder (22b);
wherein the carrier support structure (261b) is in physical contact with the movable carrier (25b), and the base support structure (262b) is in physical contact with the fixed base (23b);
wherein the carrier auxiliary structure (263b), the base auxiliary structure (264b) and the main body (260b) of the swing element (26b) are formed in one piece.

24. The image stabilization lens module (2b) of claim 23, wherein the carrier auxiliary structure (263b) overlaps the carrier support structure (261b) in a direction parallel to a part of the optical axis on an object side of the light-folding element (24b).

25. The image stabilization lens module (2b) of claim 24, wherein a first block mechanism is formed between the carrier auxiliary structure (263b) and the fixed base (23b).

26. The image stabilization lens module (2b) of claim 25, wherein the base auxiliary structure (264b) overlaps the base support structure (262b) in the direction parallel to the part of the optical axis on the object side of the light-folding element (24b).

27. The image stabilization lens module (2b) of claim 26, wherein a second block mechanism is formed between the base auxiliary structure (264b) and the movable carrier (25b).

28. The image stabilization lens module (2b) of claim 27, wherein the carrier support structure (261b) consists of at least two balls and at least two conical recesses.

29. The image stabilization lens module (2b) of claim 28, wherein the base support structure (262b) consists of at least two balls (2611b) and at least two conical recesses (2612b).

30. The image stabilization lens module (2b) of claim 27, wherein the carrier support structure (261b) has a first rotation axis (RA1).

31. The image stabilization lens module (2b) of claim 30, wherein the base support structure (262b) has a second rotation axis (RA2).

32. The image stabilization lens module (2b) of claim 31, wherein the movable carrier (25b) is rotatable relative to the fixed base (23b) in a first rotation direction (DR1) around the first rotation axis (RA1) and rotatable relative to the fixed base (23b) in a direction (DP1) opposite to the first rotation direction (DR1) around the first rotation axis (RA1).

33. The image stabilization lens module (2b) of claim 32, wherein the movable carrier (25b) is rotatable relative to the fixed base (23b) in a second rotation direction (DR2) around the second rotation axis (RA2) and rotatable relative to the fixed base (23b) in a direction (DP2) opposite to the second rotation direction (DR2) around the second rotation axis (RA2).

34. The image stabilization lens module (2b) of claim 31, wherein the first rotation axis (RA1) is orthogonal to the second rotation axis (RA2).

35. The image stabilization lens module (2b) of claim 23, wherein light in the light-folding element (24b) undergoes at least one total internal reflection.

36. The image stabilization lens module (2b) of claim 23, wherein a maximum field of view of the optical lens assembly (21b) is FOV, the following condition is satisfied:
1 degree < FOV < 50 degrees.

37. The image stabilization lens module (2b) of claim 36, wherein the maximum field of view of the optical lens assembly (21b) is FOV, the following condition is satisfied:
1 degree < FOV ≤ 35 degrees.

38. The image stabilization lens module (2b) of claim 23, wherein the driving mechanism (28b) comprises at least one coil (281b) and at least one magnet (282b) disposed corresponding to each other, one of the at least one coil (281b) and the at least one magnet (282b) is disposed on the movable carrier (25b), and another of the at least one coil (281b) and the at least one magnet (282b) is directly or indirectly disposed on the fixed base (23b).

39. The image stabilization lens module (2b) of claim 38, further comprising a flexible printed circuit board (27b) attached to the fixed base (23b).

40. The image stabilization lens module (2b) of claim 39, wherein the at least one magnet (282b) is disposed on the movable carrier (25b), and the at least one coil (281b) is disposed on the flexible printed circuit board (27b).

41. An image stabilization lens module (2d) comprising:
an optical lens assembly (21d) comprising a plurality of optical lens elements, and an optical axis passing through the plurality of optical lens elements;
a lens holder (22d) holding the plurality of optical lens elements of the optical lens assembly (21d);
a light-folding element (24d) located on the optical axis and folding the optical axis;
a movable carrier (25d) carrying the light-folding element (24d);
a fixed base (23d) connected to the movable carrier (25d) via an elastic element (EC);
a swing element (26d) disposed between the movable carrier (25d) and the fixed base (23d);
a first driving mechanism (28d) configured to drive the movable carrier (25d) to rotate relative to the fixed base (23d) in a first rotation direction (DR1) or in a direction (DP1) opposite to the first rotation direction (DR1), and the first driving mechanism (28d) comprising:
a first coil (281d); and
a first magnet (282d) disposed corresponding to the first coil (281d);
a second driving mechanism (29d) configured to drive the movable carrier (25d) to rotate relative to the fixed base (23d) in a second rotation direction (DR2) or in a direction (DP2) opposite to the second rotation direction (DR2), a rotation axis of the first rotation direction (DR1) being different from a rotation axis of the second rotation direction (DR2), and the second driving mechanism (28d) comprising:
a second coil (291d); and
a second magnet (292d) disposed corresponding to the second coil (291d); and
a flexible printed circuit board (27d) attached to the fixed base (23d);
wherein the light-folding element (24d) is located on an image side of the lens holder (22d);
wherein the swing element (26d) is in physical contact with the movable carrier (25d), and the swing element (26d) is in physical contact with the fixed base (23d);
wherein the first coil (281d) and the second coil (291d) are disposed on the flexible printed circuit board (27d), and the first magnet (282d) and the second magnet (292d) are disposed on the movable carrier (25d).

42. The image stabilization lens module (2d) of claim 41, wherein the rotation axis of the first rotation direction (DR1) is orthogonal to the rotation axis of the second rotation direction (DR2).

43. The image stabilization lens module (2d) of claim 41, further comprising a guiding yoke (31d) disposed on the movable carrier (25d).

44. The image stabilization lens module (2d) of claim 43, further comprising a guiding magnet (32d) disposed on the fixed base (23d).

45. The image stabilization lens module (2d) of claim 44, wherein the guiding yoke (31d) and the guiding magnet (32d) are disposed corresponding to each other and together generate a preload force.

46. The image stabilization lens module (2d) of claim 41, wherein light in the light-folding element (24d) undergoes at least one total internal reflection.
